# EUROPEAN PATENT APPLICATION

(11) **EP 4 811 864 A1**
(43) Date of publication of application: **23.09.2026**
(21) Application number: 24915257.0
(22) Date of filing: 31.12.2024
(51) Int. Cl.: H04W 36/00

(54) **COMMUNICATION METHOD AND APPARATUS**

(30) Priority: 05.01.2024 CN 202410026771
(71) Applicant: Huawei Technologies Co., Ltd., Shenzhen, Guangdong 518129 (CN)
(72) Inventor: LI, Haoran, Shenzhen, Guangdong 518129 (CN); XU, Yishan, Shenzhen, Guangdong 518129 (CN); XU, Shengfeng, Shenzhen, Guangdong 518129 (CN)
(74) Representative: Huawei European IPR
(86) International application number: PCT/CN2024/144377
(87) International publication number: WO 2025/146043

(57) **Abstract**

This application provides a communication method and an apparatus, belonging to the field of communications technologies, in order to implement that a terminal can simultaneously establish with a plurality of networks, respectively, 3GPP access type connections, thereby meeting more flexible communication requirements of the terminal. The method comprises: when the terminal has not established a multi-connection, the data management network element obtains indication information, and sends the indication information to the terminal. The indication information is used to indicate that the terminal needs to establish a multi-connection, where the multi-connection refers to simultaneously establishing 3GPP access type connections, and the 3GPP access type connections belong to the same or different networks.

## Description

This application claims priority to Chinese Patent Application No. 202410026771.1, filed with the China National Intellectual Property Administration on January 5, 2024, and entitled "Communication Method and Apparatus." The entire content of this application is incorporated herein by reference.

### Technical Field

This application relates to the field of communications, and in particular, to a communication method and apparatus.

### Background Technology

In the current network selection process defined by the 3rd Generation Partnership Project (3rd generation partnership project, 3GPP) for user equipment (user equipment, UE), after the UE selects a network and successfully registers, the UE is in an online state. If the UE triggers a network reselection, the UE will select a new network to replace the current network. This method may not be able to meet the UE's more diverse and flexible communication needs in the future.

### Summary of the Invention

Embodiments of this application provide a communication method and an apparatus, so that a terminal can simultaneously establish 3GPP access type connections with a plurality of networks, thereby meeting the terminal's more diverse and flexible communication needs.

To achieve the above objectives, this application adopts the following technical solutions:
According to the first aspect, a communication method is provided, applied to a data management network element, and comprises: when a terminal has not established a multi-connection, the data management network element obtains indication information, and sends the indication information to the terminal. The indication information is used to indicate that the terminal needs to establish a multi-connection, where the multi-connection refers to simultaneously establishing multiple connections of a 3rd Generation Partnership Project 3GPP access type, and the connections of the 3GPP access type belong to the same or different networks.

Based on the method of the first aspect, it can be known that, on the network side, that is, the data management network element, may send the indication information of the multi-connection, so that the terminal may trigger, based on the indication information, simultaneous establishment of a multi-connection of a 3GPP access type, that is, simultaneous access and registration to a plurality of networks, in order to meet more flexible communication needs of the terminal.

It can be understood that, in a case in which the terminal has not established a multi-connection, the terminal triggers establishment of a multi-connection as an example, which is not intended to limit. The terminal may establish a multi-connection without considering whether a multi-connection has been established at present. For example, the terminal may continue to establish a multi-connection even if the terminal has established a multi-connection. For example, if the established multi-connection comprises two connections of a 3GPP access type, the terminal may continue to establish a multi-connection, for example, increasing to three connections of a 3GPP access type. Alternatively, in a case in which the terminal has established a multi-connection, the terminal triggers the UE to change the network of the connection according to the solution of the present invention.

In one possible design scheme, the indication information comprises a network list, and the plurality of networks indicated by the network list are networks capable of being used to establish a multi-connection. In other words, the network side can indicate, to the terminal through the network list, the networks capable of being used to establish a multi-connection, thereby ensuring that the network selected by the terminal for access is a network capable of supporting the establishment of the multi-connection, and avoiding redundancy caused by the network selected by the terminal not supporting the multi-connection. Of course, if the terminal has a network list preconFIG.d locally, then the network side does not need to deliver the network list to the terminal, thereby reducing communication overhead.

Optionally, the method according to the first aspect may further include: obtaining, by a data management network element, the indication information from an application function.

Optionally, before the data management network element obtains the indication information from the application function, the method according to the first aspect may further include: the data management network element sends slice information and/or a data network name corresponding to a session of the terminal to the application function network element. The plurality of networks indicated by the network list are networks that support the slice information and/or the data network name, so as to ensure that the networks established the multi-connection with the terminal are all networks that can meet the service requirements of the terminal.

Optionally, the plurality of networks indicated by the network list do not include the network currently accessed by the terminal. This is to prevent the terminal from continuing to select and access the network currently accessed by the terminal, thereby causing a failure in establishing a multi-connection.

In a possible design solution, the network list further indicates that the plurality of networks support the radio access technology type subscribed by the terminal. These radio access technology types may be different. For example, PLMN#2 supports the radio access technology type subscribed by the terminal as TN, PLMN#3 supports the radio access technology type subscribed by the terminal as TN and NTN, and PLMN#4 supports the radio access technology type subscribed by the terminal as NTN. Another example is that PLMN#2 supports the radio access technology type subscribed by the terminal as 5G, PLMN#3 supports the radio access technology type subscribed by the terminal as 5G and 6G, and PLMN#4 supports the radio access technology type subscribed by the terminal as 6G, etc. This is to prevent a failure in establishing a multi-connection due to the radio access technology type not being supported.

In a possible design solution, the data management network element obtaining indication information comprises: the data management network element receives capability information of the terminal, and obtains the indication information based on the capability information of the terminal. The capability information of the terminal is used to indicate that the terminal supports a multi-connection, so as to avoid a situation in which the terminal is instructed to establish a multi-connection because the terminal does not support the multi-connection, thereby causing a waste of communication resources.

Optionally, in a possible design solution, the data management network element receiving capability information of the terminal comprises: during a terminal registration process, the data management network element receives, from the access and mobility management network element, a context registration request message, where the context registration request message comprises the capability information of the terminal. That is, the existing registration process is reused to implement perception of the multi-connection capability of the terminal, or a newly defined process may be used to implement the same, which is decoupled from an existing process, and information element transmission can be more flexible.

In a possible design solution, the data management network element obtaining indication information comprises: the data management network element obtains slice information requested by the terminal, and obtains the indication information based on the network slice being a slice corresponding to a multi-connection service. The slice information requested by the terminal is used to indicate a network slice requested by the terminal, that is, the network slice requested by the terminal needs the network to provide the multi-connection, so as to ensure the service requirements of the terminal.

Optionally, in an optional design of the method, the obtaining, by a data management network element, slice information requested by a terminal comprises: in a process of terminal registration, the data management network element receives, from an access and mobility management network element, a context registration request message. The context registration request message comprises the slice information requested by the terminal. That is, the existing registration procedure is reused to implement perception of the multi-connection requirement of the terminal. Alternatively, it may also be implemented by using a newly defined procedure, which is decoupled from an existing procedure, and information element transfer can be more flexible.

In a possible design of the method, the obtaining, by a data management network element, indication information comprises: in a process of terminal registration, the data management network element receives, from an access and mobility management network element, a context registration request message for obtaining subscription data of the terminal, and obtains the indication information based on the subscription data of the terminal. The subscription data of the terminal indicates that the terminal supports a multi-connection, that is, the terminal is a user who has subscribed to the multi-connection. This avoids communication redundancy caused by sending the multi-connection related information to a user who has not subscribed to the multi-connection.

Optionally, in an optional design of the method, the obtaining, by a data management network element, subscription data of a terminal comprises: in a process of terminal registration, the data management network element receives, from an access and mobility management network element, a context registration request message for obtaining subscription data of the terminal, and obtains the subscription data of the terminal based on the context registration request message. The context registration request message comprises the subscription data of the terminal. That is, the existing registration procedure is reused to implement perception of the subscription data of the terminal. Alternatively, it may also be implemented by using a newly defined procedure, which is decoupled from an existing procedure, and information element transfer can be more flexible.

In a possible design solution, the data management network element obtaining indication information comprises: The data management network element receives service information from the access and mobility management network element, and obtains the indication information based on the service requirement of the terminal not being met. The service information is used to indicate that the service requirement of the terminal is not met. In this case, the network needs to trigger the establishment of a multi-connection to provide additional network resources, in order to meet the service requirement of the terminal.

Optionally, that the service requirement of the terminal is not met comprises: The bandwidth provided for the terminal cannot meet the bandwidth requirement of the terminal's service, and/or, the signal quality of the terminal cannot meet the signal quality requirement of the terminal's service. Alternatively, there may be any other possible situation, which is not limited herein.

In a possible design solution, the data management network element obtaining indication information comprises: The data management network element may obtain the indication information based on a preset condition. The preset condition comprises at least one of the following: In a time period in which the terminal needs to establish a plurality of connections, or when the location of the terminal is within an area in which the terminal needs to establish a plurality of connections. That is, the data management network element may determine, based on the current time and the current location of the terminal, to trigger the establishment of a multi-connection, thereby avoiding additional communication overheads caused by interaction with other network elements.

Optionally, the method according to the first aspect may further include: The data management network element may obtain the location of the terminal from the access and mobility management network element through a subscription service. Alternatively, the location of the terminal may be obtained in another manner. For example, the access network device reports the location of the terminal to the data management network element through the access and mobility management network element. Specifically, a selection can be made based on actual requirements, and no specific limitation is imposed herein.

In a possible design solution, the data management network element obtaining the indication information comprises: The data management network element receives request information from the terminal, and obtains the indication information based on the request information. The request information is used to indicate that the terminal requests to establish a multi-connection, that is, the establishment of the multi-connection can be triggered by the terminal itself. This makes the interaction between the terminal and the network side in the process of triggering the establishment of the multi-connection simpler, and the communication overhead can be smaller.

Optionally, the data management network element receiving request information from the terminal comprises: The data management network element receives subscription data management obtaining request information from the access and mobility management network element. The subscription data management obtaining request information comprises the request information. That is, the implementation can be achieved by reusing existing signaling, or the implementation can be achieved through a newly defined procedure, which is decoupled from the existing procedure. The transfer of information elements can be more flexible.

In a possible design solution, the data management network element obtaining the indication information comprises: the data management network element obtains the slice information and/or the data network name corresponding to the session of the terminal, and obtains the indication information based on whether the service of the terminal requires the establishment of a multi-connection service. The slice information and/or the data network name correspond to the service of the terminal. That is, it can also implement the establishment of the multi-connection based on the service requirements of the terminal, thereby achieving on-demand establishment and avoiding redundancy.

Optionally, the obtaining, by the data management network element, the slice information and/or the data network name corresponding to the session of the terminal comprises: in a session establishment process of the terminal, the data management network element receives, from the session management network element, a context registration request message, where the context registration request message comprises the slice information and/or the data network name. That is, the indication information is obtained by reusing existing signaling in the session establishment procedure. Alternatively, the indication information may also be obtained by using a newly defined procedure, which is decoupled from an existing procedure, and the information element can be transmitted more flexibly.

Alternatively, the data management network element may also determine that the current network cannot meet the service requirements of the terminal. For example, the slice requested by the terminal can currently only be partially provided by the network, or the service requested by the terminal cannot currently be provided by the network. For example, a non-public network (non-public network, NPN) cannot provide an internet protocol (internet protocol, IP) multimedia service (IP multi-media service, IMS) service. In a scenario where the UE accesses the NPN, the UE can additionally select a PLMN to obtain the IMS service. In this case, the data management network element triggers the establishment of a multi-connection to meet the network requirements of the terminal's service.

According to the second aspect, a communication method is provided, applied to an application function network element, and comprises: The application function network element receives a request message, and sends a response message based on the request message. The request message is used to request the application function network element to provide a network that can be used to establish a multi-connection. The multi-connection refers to simultaneously establishing multiple connections of a 3rd Generation Partnership Project (3GPP) access type. The connections of the 3GPP access type belong to the same or different networks. The response message comprises a network list, and the plurality of networks indicated by the network list are networks that can be used to establish a multi-connection.

It can be understood that the application function network element may specifically be a roaming handover application function SOR-AF network element, or any other possible type of AF network element. There are no restrictions on this.

In a possible design solution, the method according to the second aspect may further include: receiving, by the application function network element, slice information and/or a data network name corresponding to a session of the terminal, and determining a network list based on a plurality of networks that support the slice information and/or the data network name.

Optionally, in the method according to the second aspect, the network list may further indicate that the plurality of networks do not include the network currently accessed by the terminal.

Optionally, the network list further indicates that the plurality of networks support the radio access technology type subscribed by the terminal.

It can be understood that the technical effects of the method according to the second aspect may also refer to the relevant descriptions of the method according to the first aspect, and will not be repeated here.

Aspect 3, a communication method is provided, applied to an access and mobility management network element, and comprises: The access and mobility management network element sends service information to a data management network element, and receives the data management network element according to the instruction information in the service information, and sends the instruction information to the terminal. The service information indicates that the service requirement of the terminal is not met; the instruction information is used to indicate that the terminal needs to establish a multi-connection, where the multi-connection refer to simultaneously establishing multiple connections of a 3rd Generation Partnership Project (3GPP) access type, and the connections of the 3GPP access type belong to the same or different networks.

In a possible design solution, the method according to the third aspect may further include: The access and mobility management network element receives an N2 message from an access network device, where the N2 message comprises service information. The access and mobility management network element determines, according to the service information, that the access network device cannot meet the service requirement of the terminal.

Optionally, the method according to the third aspect may further include: The access and mobility management network element obtains service information according to the fact that the terminal is located in an area with low signal quality. The service information is specifically used to indicate that the signal quality of the terminal cannot meet the signal quality requirement of the terminal's service.

It can be understood that the technical effects of the method described in the third aspect may also refer to the related descriptions of the method described in the first aspect, and will not be further elaborated.

According to the fourth aspect, a communication method is provided. The method may be performed by a terminal, or may be performed by a module (for example, a processor, a chip, or a chip system) applied to the terminal, or may be performed by a logical node, logical module, or software that can implement all or some functions of the terminal. For ease of description, the following uses an example in which the method is performed by the terminal for description. The method comprises: receiving indication information, and establishing a multi-connection according to the indication information. The indication information is used to indicate that the terminal needs to establish the multi-connection. The multi-connection refers to simultaneously establishing multiple connections of a 3rd Generation Partnership Project 3GPP access type, and the connections of the 3GPP access type belong to the same or different networks.

In a possible design solution, the terminal has established a 3GPP access type connection with the first network. The foregoing "establishing a multi-connection according to the indication information" comprises: selecting, according to the indication information, a second network from a plurality of networks indicated by a network list, and establishing a 3GPP access type connection with the second network. The plurality of networks indicated by the network list are networks that can be used to establish the multi-connection.

Optionally, the plurality of networks indicated by the network list do not include the first network.

Optionally, the network list further indicates that the plurality of networks support a radio access technology type subscribed by the terminal.

Optionally, the indication information is further used to indicate the network list.

In a possible design solution, the method according to the fourth aspect may further include: sending capability information of the terminal, where the capability information of the terminal is used to indicate that the terminal supports a multi-connection.

In a possible design solution, the method according to the fourth aspect may further include: sending slice information and/or a data network name corresponding to a session of the terminal. The slice information and/or the data network name correspond to a service of the terminal, and the service of the terminal is a service that requires establishment of a multi-connection.

In a possible design solution, the method according to the fourth aspect may further include: when the terminal needs to establish a plurality of connections, sending request information, where the request information is used to indicate that the terminal requests to establish a plurality of connections.

In a possible design solution, the method according to the fourth aspect may further include: in response to an operation of a user to enable a plurality of connections, determining that the terminal needs to establish a plurality of connections. That is, the plurality of connections are established on demand according to the user's requirements, to ensure the user's experience. Alternatively, when a service of the terminal needs to be executed, obtaining policy information that matches the service of the terminal; and when the policy information indicates that a plurality of connections need to be established, determining that the terminal needs to establish a plurality of connections, so that the plurality of connections can match the service requirements, to ensure the user's experience.

Among them, the policy information may be a URSP rule. In this embodiment of this application, the URSP rule is used as an example for description. However, the URSP rule is not limited, and any policy and/or rule that is similar to the URSP rule or that can implement a routing function may be used to implement the solutions in this application.

It can be understood that the technical effects of the method according to the fourth aspect may also refer to the related descriptions of the method according to the first aspect, and will not be further elaborated.

According to the method described in the fifth aspect, it can be learned that the terminal may perform policy information matching. When the service matches the policy information indicating that a multi-connection needs to be established, the terminal triggers the establishment of the multi-connection with the network side, so as to ensure that the multi-connection can meet the requirements of the service, and ensure the user experience. The multi-connection refers to simultaneously establishing multiple connections of a 3rd Generation Partnership Project 3GPP access type, and the connections of the 3GPP access type belong to the same or different networks.

Based on the method described in the fifth aspect, it can be learned that the terminal may perform policy information matching. When the service matches the policy information indicating that a multi-connection needs to be established, the terminal triggers the establishment of the multi-connection with the network side, so as to ensure that the multi-connection can meet the requirements of the service, and ensure the user experience.

In a possible design solution, the terminal has established a connection of a 3GPP access type with the first network, and establishes a multi-connection, including: selecting a second network from a plurality of networks indicated by a network list, and establishing a connection of a 3GPP access type with the second network. The network list is indicated by policy information, and the plurality of networks indicated by the network list are networks that can be used to establish a multi-connection.

In a possible design solution, the method according to the fifth aspect may further include: receiving, by the terminal, policy information from a network.

Among them, the policy information may be a URSP rule. Certainly, in this embodiment of this application, the URSP rule is used as an example for description, but is not limited to the URSP rule. Any policy and/or rule that is similar to the URSP rule or that can implement a routing function may be used to implement the solutions in this application.

It may be understood that, for the technical effects of the method according to the fifth aspect, refer to the related descriptions of the method according to the first aspect. Details are not described again.

Aspect 6, a communication method is provided, applied to a policy control network element, and comprises: when the policy information of the terminal needs to be updated, the policy control network element obtains new policy information of the terminal, and sends the new policy information to the terminal. The new policy information is used to indicate that a multi-connection needs to be established. The multi-connection refers to simultaneously establishing multiple connections of a 3rd Generation Partnership Project (3GPP) access type. The connections of the 3GPP access type belong to the same or different networks.

In a possible design solution, the new policy information further indicates a combination of types of radio access technologies required for establishing the multi-connection.

Among them, the policy information may be a URSP rule. In this embodiment of this application, the URSP rule is used as an example, but is not limited to the URSP rule. Any policy and/or rule that is similar to the URSP rule or that can implement a routing function may be used to implement the solutions in this application.

It can be understood that the technical effect of the method described in Aspect 6 may also refer to the related introduction of the method described in Aspect 1, and will not be described again.

According to the seventh aspect, a communications apparatus is provided. The communications apparatus comprises a module conFIG.d to perform the method described in any one of the first aspect to the sixth aspect.

In a possible design solution, the communications apparatus according to the seventh aspect may further include a transceiver. The transceiver may be a transceiver circuit or an interface circuit. The transceiver may be conFIG.d to enable the communications apparatus according to the seventh aspect to communicate with another communications apparatus.

In a possible design solution, the communications apparatus according to the seventh aspect may further include a memory. The memory may be integrated with the processor, or may be disposed separately. The memory may be conFIG.d to store instructions related to the method described in any one of the first aspect to the sixth aspect.

In embodiments of this application, the communications apparatus according to the seventh aspect may be a network device, or may be a chip (system), or another component or assembly that can be disposed in the network device, or an apparatus that comprises the network device.

It may be understood that, for technical effects of the apparatus according to the seventh aspect, refer to related descriptions of the method in any one of the first aspect to the sixth aspect. Details are not described again.

Aspect 8: A communications apparatus is provided. The communications apparatus comprises: a processor, where the processor is coupled to a memory, and the processor is conFIG.d to execute instructions stored in the memory, so that the communications apparatus performs the method according to any one of aspects 1 to 6.

In a possible design solution, the communications apparatus according to aspect 8 may further include a transceiver. The transceiver may be a transceiver circuit or an interface circuit. The transceiver may be conFIG.d to enable the communications apparatus according to aspect 8 to communicate with another communications apparatus.

In this embodiment of this application, the communications apparatus according to aspect 8 may be a network device according to any one of aspects 1 to 6, or may be a chip (system), another component, or another assembly that is disposed in the network device. Alternatively, the communications apparatus may be an apparatus that comprises the network device.

In addition, for the technical effects of the communications apparatus according to aspect 8, refer to the technical effects of the method according to any one of aspects 1 to 6. Details are not described herein again.

According to a ninth aspect, a communications apparatus is provided, including a processor and a memory, where; The memory is conFIG.d to store an instruction, and when the processor executes the instruction, the communications apparatus performs the method according to any one of the first aspect to the sixth aspect.

In a possible design solution, the communications apparatus according to the ninth aspect may further include a transceiver. The transceiver may be a transceiver circuit or an interface circuit. The transceiver may be conFIG.d to communicate with another communications apparatus according to the sixth aspect.

In the embodiments of this application, the communications apparatus according to the ninth aspect may be the network device according to any one of the first aspect to the sixth aspect, or a chip (system) or another component or component that may be disposed in the network device, or an apparatus that comprises the network device.

In addition, for a technical effect of the communications apparatus according to the ninth aspect, refer to a technical effect of the method according to any one of the first aspect to the sixth aspect. Details are not described herein again.

According to a tenth aspect, a chip is provided. The chip comprises a controller and an interface circuit. The controller is conFIG.d to interact with another apparatus by using the interface circuit, to perform the method according to any one of the first aspect to the sixth aspect.

Aspect 11, a communication system is provided. The communication system comprises a data management network element conFIG.d to perform the method according to Aspect 1, and a terminal conFIG.d to perform the method according to Aspect 4. Alternatively, the communication system comprises a terminal conFIG.d to perform the method according to Aspect 5, and a policy control network element conFIG.d to perform the method according to Aspect 6.

Aspect 12, a computer-readable storage medium is provided. The computer-readable storage medium comprises a computer program or instructions, and when the computer program or instructions are executed, the method described in any one of Aspects 1 to 6 is performed.

Aspect 13, a computer program product is provided. The computer program product comprises a computer program or instructions, and when the computer program or instructions are executed, the method described in any one of Aspects 1 to 6 is performed.

### FIG. Description

FIG. 1 is a schematic diagram of the architecture of 5GS;
FIG. 2 is a schematic diagram of the SOR process during registration;
FIG. 3 is a schematic diagram of the SOR process after registration;
FIG. 4 is a schematic diagram of the session establishment process;
FIG. 5 is a schematic diagram of the architecture for dual connectivity;
FIG. 6 is a schematic diagram of network selection.
FIG. 7 is a schematic architectural diagram of a communications system according to an embodiment of this application;
FIG. 8 is a schematic flowchart of a communication method according to an embodiment of this application, one;
FIG. 9 is a schematic flowchart of a communication method according to an embodiment of this application, two;
FIG. 10 is a schematic flowchart of a communication method according to an embodiment of this application, three;
FIG. 11 is a schematic flowchart of a communication method according to an embodiment of this application, four.
FIG. 12 is a schematic flowchart 5 of a communication method according to an embodiment of this application;
FIG. 13 is a schematic flowchart 6 of a communication method according to an embodiment of this application;
FIG. 14 is a schematic structural diagram 1 of a communication apparatus according to an embodiment of this application;
FIG. 15 is a schematic structural diagram 2 of a communication apparatus according to an embodiment of this application.

### Specific Implementation Manner

The technical solutions in the embodiments of this application may be applied to various communications systems, such as a wireless network (Wi-Fi) system, a vehicle-to-everything (vehicle to everything, V2X) communications system, a device-to-device (device-to-device, D2D) communications system, an Internet of Vehicles communications system, a 4th generation (4th generation, 4G) mobile communications system, such as a long term evolution (long term evolution, LTE) system, a worldwide interoperability for microwave access (worldwide interoperability for microwave access, WiMAX) communications system, a 5th generation (5th generation, 5G) mobile communications system, such as a new radio (new radio, NR) system, and future communications systems, such as 5.5G, a 6th generation (6th generation, 6G) mobile communications system, etc.

For ease of understanding, the following first describes technical terms involved in this application.

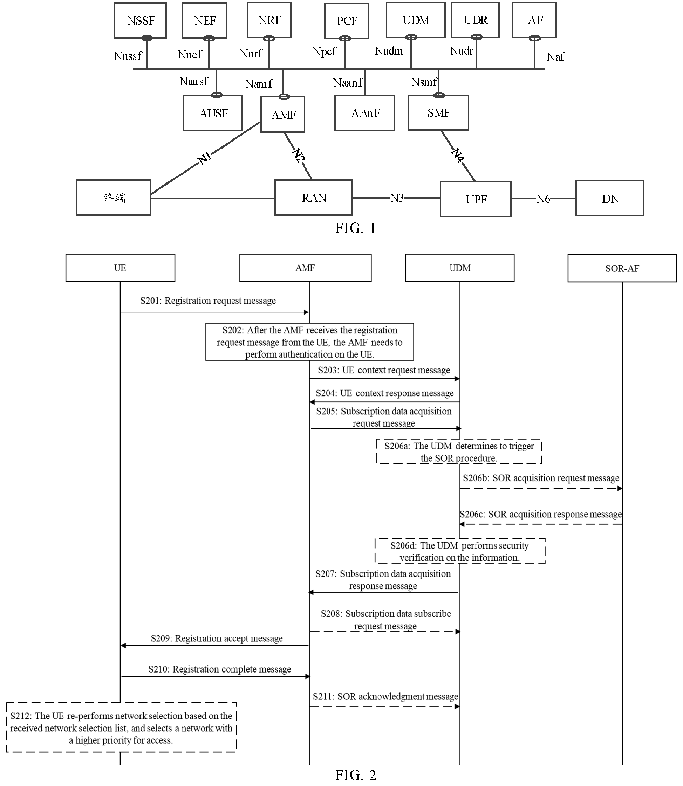

FIG. 1 is a schematic architectural diagram of a 5GS. As shown in FIG. 1, the 5GS comprises an access network (access network, AN) and a core network (core network, CN), and may further include a terminal.

The terminal may be a terminal with a transceiver function, or a chip or a chip system that can be disposed in the terminal. The terminal may also be referred to as user equipment (user equipment, UE), an access terminal, a subscriber unit (subscriber unit), a subscriber station, or a mobile station (mobile station, MS), a mobile station, a remote station, a remote terminal, a mobile device, a user terminal, a terminal, a wireless communication device, a user agent, or a user device. The terminal in the embodiments of this application may be a mobile phone (mobile phone), a cellular phone (cellular phone), a smart phone (smart phone), a tablet computer (Pad), a wireless data card, a personal digital assistant (personal digital assistant, PDA), a pad, a wireless modem, a handset, a laptop computer, a machine type communication (machine type communication, MTC) terminal, a computer with a wireless transceiver function, a virtual reality (virtual reality, VR) terminal, augmented reality (augmented reality, AR) terminal, a wireless terminal in industrial control, a wireless terminal in self-driving, a wireless terminal in remote medical, and a smart grid a wireless terminal, a wireless terminal in transportation safety, a wireless terminal in a smart city, a wireless terminal in a smart home, a vehiclemounted terminal, and a road side unit (road side unit, RSU) with a terminal function, etc. Alternatively, the terminal in this application may be an in-vehicle module, an in-vehicle module, an in-vehicle component, an in-vehicle chip, or an in-vehicle unit built into a vehicle as one or more parts or units.

The AN is conFIG.d to implement an access-related function, provide a network access function for an authorized user, and determine transmission links of different quality according to a user level, a service requirement, and the like to transmit user data. The AN forwards control signals and user data between the terminal and the CN. The AN may include an access network device, or may be referred to as a radio access network (radio access network, RAN) device.

The CN is mainly responsible for maintaining the subscription data of the mobile network, and providing functions such as session management, mobility management, policy management, and security authentication for the terminal. The CN mainly comprises all or some of the following functions: a user plane function (user plane function, UPF), an authentication server function (authentication server function, AUSF), and an access and mobility management function (access and mobility management function, AMF), a session management function (session management function, SMF), a network slice selection function (network slice selection function, NSSF), a network exposure function (network exposure function, NEF), and a network storage function (network repository function, NRF), a policy control function (policy control function, PCF), unified data management (unified data management, UDM), unified data repository (unified data repository, UDR), and application function (application function, AF).

As shown in FIG. 1, the UE accesses the 5G network through the RAN device. The UE communicates with the AMF through the N1 interface (referred to as N1). The RAN communicates with the AMF through the N2 interface (referred to as N2). The RAN communicates with the UPF through the N3 interface (referred to as N3). The SMF communicates with the UPF through the N4 interface (referred to as N4). The UPF accesses the data network (data network, DN) through the N6 interface (referred to as N6). In addition, the control plane functions such as the AUSF, AMF, SMF, NSSF, NEF, NRF, PCF, UDM, UDR, or AF in FIG. 1 use service-based interfaces for interaction. For example, the AUSF provides the Nausf service-based interface for external entities. The AMF provides the Namf service-based interface for external entities. The SMF provides the Nsmf service-based interface for external entities. The NSSF provides the Nnssf service-based interface for external entities. The NEF provides the Nnef service-based interface for external entities. The NRF provides the Nnrf service-based interface for external entities. The PCF provides the Npcf service-based interface for external entities. The UDM provides the Nudm service-based interface for external entities. The UDR provides the Nudr service-based interface for external entities. The AF provides the Naf service-based interface for external entities.

The RAN device may be a device that provides access for a terminal. For example, the RAN device may include: a next-generation mobile communications system, for example, a 6G access network device, for example, a 6G base station, or in a next-generation mobile communications system, the network device may also have another naming manner. All these are covered within the protection scope of the embodiments of this application, and this application does not impose any limitation thereon. Alternatively, the RAN device may also include an access point (access point, AP) in a wireless fidelity (wireless fidelity, WiFi) system, a wireless relay node, a wireless backhaul node, various forms of macro base stations, micro base stations (also referred to as small cells), relay stations, access points, wearable devices, vehiclemounted devices, and the like.

The UPF is primarily responsible for user data processing (such as forwarding, receiving, billing, etc.). For example, the UPF can receive user data from a data network (data network, DN), and forward the user data to a terminal through an access network device. The UPF can also receive user data from a terminal through an access network device, and forward the user data to the DN. The DN refers to an operator network that provides data transmission services for users. For example, the Internet Protocol (internet protocol, IP) Multimedia Service (IP multi-media service, IMS), and the Internet (internet), etc. The DN can be an external network of the operator, or a network controlled by the operator, used to provide service for the terminal. In a protocol data unit (protocol data unit, PDU) session, the UPF that is directly connected to the DN through N6 is also referred to as a protocol data unit session anchor (protocol data unit Session Anchor, PSA).

The AUSF is primarily used to perform security authentication for a terminal.

The AMF is primarily used for mobility management in a mobile network. For example, it handles user location updates, user registration with the network, and user handovers.

The SMF is primarily used for session management in a mobile network. For example, it handles session establishment, modification, and release. Specific functions include assigning an internet protocol (internet protocol, IP) address to a user, and selecting a UPF that provides data packet forwarding functions.

The PCF primarily supports providing a unified policy framework to control network behavior. It provides policy rules to the control layer network functions. Additionally, the PCF is responsible for obtaining user subscription information related to policy decision-making. The PCF can provide policies to the AMF and SMF, such as quality of service (quality of service, QoS) policies and slice selection policies.

The NSSF is primarily used to select a network slice for a terminal.

The NEF is primarily used to support the openness of capabilities and events.

The UDM is mainly used to store user data, such as subscription data, authentication/authorization data, etc.

The UDR is primarily used to store structured data. The stored content comprises subscription data and policy data, externally exposed structured data, and application-related data.

AF primarily supports services by interacting with the CN. For example, it can influence data routing decisions, policy control functions, or provide third-party services to the network side.

It can be understood that the functions mentioned in the embodiments of this application can also be described as functional network elements or functional entities. For example, the UPF may be described as a UPF network element, the AMF may be described as an AMF network element, the SMF may be described as an SMF network element, the PCF may be described as a PCF network element, and so on. By analogy, this is not limited.

### 2. UE route selection policy (UE route selection policy, URSP):

The URSP rule is policy information delivered by the PCF network element to the UE. Each time a new application emerges and needs to establish a session to obtain a service, the UE evaluates the URSP rule and selects a most appropriate URSP rule to match the application. so that when the UE establishes a session of the application, the session is established according to a requirement of the selected URSP rule.

A URSP rule contains the following items:

### 1) Traffic descriptor:

The traffic volume descriptor comprises some parameters used to match an application, for example, information such as an application descriptor (OS ID and APP ID), an IP descriptor, a domain name descriptor, and a data network name (data network name, DNN). When the UE needs to initiate a new service, The UE needs to match the URSP rule based on the service characteristics and traffic volume descriptor, and selects the most matched URSP rule to serve the UE. For example, when the user wants to use the social software, and the APP ID in the URSP rule is the social software traffic volume descriptor, the UE should match the URSP rule, and establish a session according to the requirement of the URSP rule to obtain the service.

### 2) Route selection descriptors (route selection descriptors, RSD):

A URSP rule may include one or more route selection descriptors. Different route selection descriptors have different priorities. When establishing a session, the UE needs to establish the corresponding session according to the requirements of the route selection descriptor RSD. Specifically, it can be divided into the following two parts:

### a) Route selection components (route selection components):

The route selection component comprises session and service continuity mode (session and service continuity mode, SSC mode), slice information, DNN information, etc. When the UE establishes a session, the UE needs to establish the corresponding session according to the requirements of the route selection component. Optionally, the route selection component may include an access type preference (access type preference). Currently, this parameter may have three possible values, which respectively indicate 3GPP, Non-3GPP, and Multi-Access. When indicating 3GPP, it means that the session needs to be established through the 3GPP access type. When indicating Non-3GPP, it means that the session needs to be established through the Non-3GPP access type. When indicating Multi-Access, it means that the session needs to be established simultaneously through the 3GPP access type and the Non-3GPP access type.

### b) Route selection validation criteria:

The route selection verification standard is an optional parameter, and may include time window information and geographical location information. The two parameters are used to verify whether the RSD including the route selection verification standard is currently available. Only when the current time of the UE meets the time window information requirement and the geographical location meets the geographical location information requirement, Only the UE can establish a corresponding session according to the RSD. When the RSD does not include the corresponding condition information, it may be considered that the RSD has no such restrictions, and the UE may establish a session at any time and/or any place.

### 3. Steering of roaming (Steering of roaming, SOR):

The SOR procedure may be used to update configuration of the UE, for example, update a network selection list of the UE, so that the UE can select a PLMN for access according to a public land mobile network (public land mobile network, PLMN) indicated in the network selection list. The SOR procedure can be classified into two types: the SOR procedure initiated during the registration procedure and the SOR procedure triggered after the registration procedure. The following sections describe the SOR procedure.

As shown in FIG. 2, the specific process of the SOR procedure initiated in the registration procedure is as follows:
S201: The UE sends a registration request (registration request) message to the AMF.

The registration request message carries a registration type (registration type) and identification information of the UE.

The registration type comprises the following:
1) Initial registration: A registration procedure initiated when the UE is in a deregistered state.
2) Mobility registration update (mobility registration update): a registration procedure that needs to be initiated when the UE moves.
3) Periodic registration update (periodic registration update): When the UE is in a registration state, a registration procedure is initiated because the periodic registration update timer expires.
4) Emergency registration (emergency registration): a registration procedure initiated when the UE is in a servicelimited state.

The identification information of the UE may be a subscription concealed identifier (subscription concealed identifier, SUCI), or a 5G globally unique temporary UE identity (5G globally unique temporary identifier, 5G-GUTI) allocated by an AMF serving the UE, or a permanent equipment identifier (permanent equipment identifier, PEI). If the UE can provide a valid 5G-GUT, the 5G-GUTI is carried in the registration request. If the UE cannot provide a valid 5G-GUTI, the registration request carries the SUCI. During emergency registration, if the UE cannot provide a valid 5G-GUTI or SUPI (that is, there is no SUCI. SUCI is the encrypted SUPI), the registration request carries the PEI.

S202: After the AMF receives a registration request message from the UE, the AMF needs to perform authentication on the UE.

S203: The AMF sends a UE context request message (Nudm_UECM_Registration request) to the UDM.

S204: The UDM sends a UE context response message (Nudm_UECM_Registration response) to the AMF.

After the UE's authentication is successful, the AMF registers the UE context with the UDM, that is, performs S203 to S204.

S205: The AMF sends a subscription data acquisition request message (Nudm_SDM_Get request) to the UDM.

If the AMF does not have the subscription data of the UE, the AMF further needs to obtain the subscription data of the UE from the UDM.

Optionally, S206a: The UDM determines to trigger the SOR procedure.

If the subscription information of the UE indicates that the SOR procedure can be triggered based on the initial registration of the UE in the visited public land mobile network (visited public land mobile network, VPLMN), then when the UE performs initial registration in the VPLMN (in other words, the AMF is an AMF in the VPLMN, or a V-AMF), the UDM (in other words, a UDM in the home public land mobile network (home public land mobile network, HPLMN), or a H-UDM should trigger the SOR procedure for the UE. Alternatively, the UDM may also trigger the SOR procedure based on an operator policy.

It can be understood that, unless otherwise specified, the UDM mentioned in embodiments of this application may be understood as a UDM in an HPLMN. Unless otherwise specified, the AMF mentioned in embodiments of this application may be understood as an AMF in a VPLMN, or may be understood as an AMF in an HPLMN. For example, if the UE registers with the HPLMN, the AMF is an AMF in the HPLMN. If the UE registers with the VPLMN, the AMF is an AMF in the VPLMN.

Optionally, in S206b, the UDM sends a SOR acquisition request (Nsoraf_SoR_Get request) message to the steering of roaming application function (steering of roaming application function, SOR-AF).

Optionally, in S206c, the SOR-AF sends a SOR acquisition response (Nsoraf_SoR_Get response) message to the UDM.

Optionally, in S206d, the UDM performs security verification on the information.

Among them, if the UDM needs to provide the UE with a SOR when the UE performs registration in the VPLMN, and there is no HPLMN policy for the SOR-AF call, then S206b-S206c is not performed. The UDM obtains the stored network selection list from the UDR. If the UDM needs to provide the UE with a SOR when the UE performs registration in the VPLMN, and there is an HPLMN policy for the SOR-AF call, then the UDM obtains the network selection list from the SOR-AF through S206b-S206c. At this time, after the UDM obtains the network selection list of the UE from the SOR-AF, the UDM may further perform S206d to perform security verification on the network selection list.

S207: The UDM sends a subscription data acquisition response (Nudm_SDM_Get response) message to the AMF.

After the UDM determines information about the SOR (such as the UE's network selection list), the UDM can send a subscription data acquisition response message to the AMF. This message carries the subscription data of the UE and the network selection list.

Optionally, S208: The AMF sends a subscription data subscribe request (Nudm_SDM_Subscribe request) message to the UDM.

The subscription data subscription request message is used to indicate that if the UDM has a change in subscription data related to the UE, the UDM needs to send the latest subscription data of the UE to the AMF according to the requirements of the subscription data subscription request message.

S209: The AMF sends a registration accept (registration accept) message to the UE.

The AMF comprises in the registration accept message the network selection list received by the AMF from the UE.

S210: The UE sends a registration complete (registration complete) message to the AMF.

The UE performs security verification on the received network selection list. If the security verification succeeds and the UDM does not require sending a feedback message, the UE sends a registration complete message to the AMF, where the message does not include the SOR acknowledgment message. If the security verification fails, or the UE is conFIG.d to require receiving SOR information, such as a network selection list, but does not receive the corresponding network selection list in the registration accept message, then the UE sends a registration complete message to the AMF, where the message also does not include the SOR acknowledgment message. If the security verification succeeds and the UDM requires sending a feedback message, then the UE sends a registration complete message to the AMF, where the message comprises the SOR acknowledgment message.

Optionally, S211: The AMF sends an SOR acknowledgment message to the UDM.

If the AMF receives the SOR acknowledgment message, then the AMF should provide the SOR acknowledgment message to the UDM. After receiving the SOR acknowledgment message, the UDM can determine, based on a requirement of an operator policy or subscription data of the UE, whether feedback needs to be provided to the SOR-AF. If the UDM needs to provide feedback to the SOR-AF, the UDM provides feedback to the SOR-AF by sending the SOR acknowledgment message.

Optionally, S212: The UE re-performs network selection based on the received network selection list, and selects a network with a high priority for access.

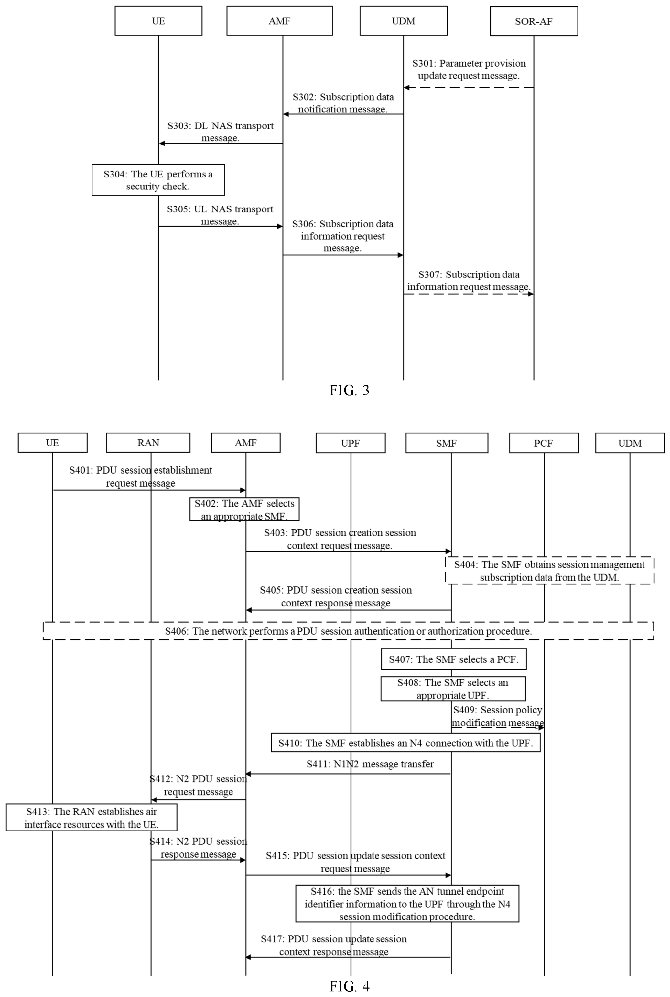

As shown in FIG. 3, the specific procedure of the SOR procedure triggered after the registration procedure is as follows:
Optionally, S301: The SOR-AF sends a parameter provision update request (Nudm_ParameterProvision_Update request) message to the UDM.

If the UDM supports obtaining, from the SOR-AF, a list of preferred PLMN/access technology combinations (preferred PLMN/access technology combinations), that is, the network selection list, then the SOR-AF may send a parameter provision update request to the HPLMN UDM, in order to carry the network selection list.

S302: The UDM sends a subscription data notification (Nudm_SDM_Notification) message to the AMF.

The subscription data notification message may include an updated network selection list. The UDM may obtain the updated network selection list (for example, sent by the SOR-AF in S300, or obtained from the UDR). The UDM notifies the AMF of the subscriber profile update. Optionally, the updated network selection list information may be included in roaming steering information (steering of roaming information). In this case, the UDM may send a subscription data notification message to the AMF to carry the updated network selection list.

S303: The AMF sends a downlink NAS transport (DL NAS Transport) message to the UE.

The downlink NAS transport message may include information obtained by the AMF from the UDM, that is, the AMF transparently transmits the information obtained from the UDM to the UE. In other words, if the UDM sends an updated network selection list to the AMF, the downlink NAS message comprises the network selection list. If the UDM sends roaming steering information to the AMF, and the roaming steering information comprises the updated network selection list, the downlink NAS transport message also comprises the roaming steering information.

S304: The UE performs a security check.

If the UE receives the aforementioned roaming handover information or an updated network selection list, the UE needs to perform a security check to confirm that this information is provided by the HPLMN. If the security check is successful, the UE will upload this information to the user service identity module (user service identity module, USIM) card, or replace the information previously stored by the UE.

S305: The UE sends an uplink NAS transport (UL NAS Transport) message to the AMF.

If the UDM requests the UE to provide a response message, the UE may include the response message in the uplink NAS transport message. Optionally, the response message may be a message included in a roaming handover transparent container (SOR transparent container) in the uplink NAS transport message, and specifically may be a subscription data information request (Nudm_SDM_Info request) message.

S306: The AMF sends a subscription data information request message to the UDM.

The UDM verifies that the subscription data request information message is sent by the UE.

Optionally, S307: The UDM sends a subscription data information request (Nsoraf_SoR_Info request) message to the SOR-AF.

If the updated network selection list is provided by the SOR-AF, the UDM may perform S307 to indicate that the network selection list has been successfully transmitted to the UE.

### 4. Session establishment procedure:

As shown in FIG. 4, 3GPP defines a session establishment procedure, which is specifically as follows:
S401: The UE sends a PDU session establishment request message (PDU Session Establishment Request) to the AMF. The PDU session establishment request message is a NAS message and carries parameters such as a PDU session identifier (PDU session ID), a request type (request type), a name of a data network requested by the UE (UE requested DNN), and slice information (S-NSSAI).
S402: The AMF selects an appropriate SMF.
S403: The AMF sends a PDU session creation session context request (Nsmf_PDUSession_CreateSMContext Request) message to the SMF. The PDU session creation session context request message carries parameters such as the UE's SUPI, PDU session identifier, and the like.

Optionally, S404: The SMF obtains session management subscription data from the UDM. The subscription data may include information indicating whether session establishment is allowed.

S405: The SMF sends a PDU session establishment session context response (Nsmf_PDUSession_CreateSMContext Response) message to the AMF.

Optionally, S406: The network performs a PDU session authentication or authorization procedure.

S407: The SMF selects a PCF. If dynamic PCC rules are required, the SMF selects the PCF and establishes a session policy association with the PCF. For example, the SMF sends a policy association establishment request (SM Policy Association Establishment Request) message to the PCF, and the PCF sends a policy association establishment response (SM Policy Association Establishment Response) message to the SMF.

S408: The SMF selects an appropriate UPF.

Optionally, S409: The SMF sends a session policy modification (SMF initiated SM Policy Association Modification) message to the PCF. For example, if the PCF has previously subscribed to events from the SMF, such as changes in the UE's time zone or location, the SMF may report the change information to the PCF through the session policy modification message.

S410: The SMF establishes an N4 connection with the UPF. Specifically, as in S410a, the SMF sends an N4 session establishment/modification request (N4 Session Establishment/Modification Request) message to the UPF. This message comprises N4 rules, such as packet detection rules (packet detection rule, PDR) and forwarding action rules (forwarding action rule, FAR). Additionally, as in S410b, the UPF sends an N4 session establishment/modification response (N4 Session Establishment/Modification Response) message to the SMF.

S411: The SMF sends an N1N2 message transfer (Namf_Communication_N1N2MessageTransfer) message to the AMF, where the message comprises information such as the session identifier, N2 interface session management information (N2 SM information), and an N1 interface session management container (N1 SM Container). The N2 interface session management information is a message sent by the SMF to the RAN by using the AMF. The N2 interface session management information further comprises information such as a tunnel endpoint identifier of the UPF, and is used to notify the RAN of where (which may be understood as a destination address of the uplink data) the uplink data should be sent. Information in the N1 interface session management container is sent by the SMF to the UE through the AMF. For example, the AMF sends the information to the UE through a NAS message.

S412: The AMF sends an N2 PDU session request (N2 PDU Session Request) message to the RAN, where the message carries the N2 interface session management information and a NAS message that needs to be sent to the UE, and the NAS message comprises the session identifier and the N1 interface session management container.

S413: The RAN establishes an air interface resource with the UE. For example, the RAN sends the NAS message described above to the UE. The NAS message may also carry a PDU session establishment accept message.

S414: The RAN sends an N2 PDU session response (N2 PDU Session Response) message to the AMF. The message carries the tunnel endpoint identifier on the RAN side, that is, the AN tunnel endpoint identifier information.

S415: The AMF sends a PDU session update session context request (Nsmf_PDUSession_UpdateSMContext Request) message to the SMF. The message carries the AN tunnel endpoint identifier information.

S416: The SMF sends the AN tunnel endpoint identifier information to the UPF through an N4 session modification procedure. For example, S416a: The SMF sends an N4 session modification request message to the UPF. The message comprises the AN tunnel endpoint identifier information, so as to notify the UPF of where the downlink data should be sent. In addition, S416b: The UPF sends an N4 session modification response message to the SMF.

S417: The SMF sends a PDU session update session context response (Nsmf_PDUSession_UpdateSMContext Response) message to the AMF.

### 5. 3GPP connection architecture:

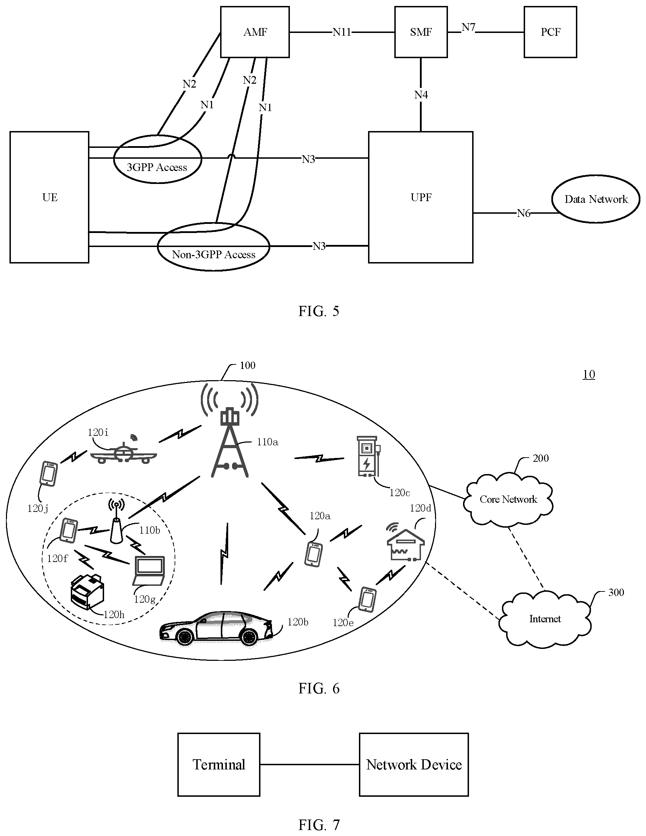

As shown in FIG. 5, an existing 3GPP architecture supports UE to access a network by using both a 3GPP access type (3GPP access type) and a non-3GPP access type (N3GPP access type). The so-called 3GPP access type, that is, the access type of the access network is the 3GPP access type. The 3GPP access type may include the following access technologies: LTE (corresponding to a 4G cellular network), NR (corresponding to a 5G cellular network), or may be a 3GPP-defined satellite access mode, including a low-orbit satellite, a medium-orbit satellite, a synchronous satellite, and the like. The non-3GPP access type comprises an untrusted non-3GPP access technology (untrusted non-3GPP access), for example, a core network is accessed by using a radio access node purchased by an individual, and a trusted non-3GPP access technology (trusted non-3GPP access), for example, A wireless access node deployed by a carrier is used to access a core network and a wired access technology (wireline access). The non-3GPP access type may be Wireless Fidelity (WiFi), Bluetooth, ZigBee, or the like.

### 6. Network Selection:

Before a UE (User Equipment) can obtain services by accessing a network, it must first perform network selection. After selecting an appropriate network and completing registration, the UE can then normally obtain services.

Currently, 3GPP defines network selection as follows:
First, when the UE is powered on, it first checks whether the UE has a subscriber identity module (subscriber identity module, SIM) card. If the UE does not have a SIM card, or if the SIM card is not available, the UE will be in a "NO SIM" state. In this state, the UE must wait until the SIM card becomes available before it can perform network selection.

If the UE's current SIM card is available, the UE will then check whether it has an RPLMN (register PLMN), which refers to the PLMN that the UE last registered with. When the UE has an RPLMN, it will prioritize initiating registration from the RPLMN. The information about the RPLMN can be stored in the SIM card or in the UE itself.

If the UE selects the RPLMN, it will attempt to register with the RPLMN. If the registration fails, the UE will select a network according to the network selection list, and attempt to register in sequence based on the priority of the network selection list. If the registration is successful, the UE enters the on-PLMN state, indicating that the selected PLMN is what PLMN and the UE is on the network.

If the UE does not have an RPLMN, or if the registration with the RPLMN fails, the UE will select a network according to the network selection list. The UE will attempt to register in sequence based on the priority of the network selection list. If the registration is successful, the UE enters the on-PLMN state. If the registration fails and there are still networks in the network selection list that have not been tried, the UE will continue to attempt registration according to the network selection list. If the registration fails and there are no more networks available in the network selection list, the UE will determine whether there is an available PLMN. If there is, the UE will attempt to register; if there is not, the UE will enter a waiting state.

When the UE is in the on-PLMN state, there are several scenarios that may trigger network reselection:
If the UE is currently connected to a VPLMN, the UE will periodically perform network reselection. After one cycle ends, the UE will search for networks with higher priority. If no network with higher priority appears, the UE will maintain the current on-PLMN state. If a network with higher priority appears, the UE will select the network with higher priority and attempt to connect to it.

When the network currently accessed by the UE loses coverage, the UE will determine whether there is an available network for access at the moment. If there is an available network, the UE will select a network according to the priority. If there is no available network, the UE will enter a waiting state. If the network where the UE was previously registered is now available, the UE will resume its online state. If other available networks are present, the UE will select a network according to the priority for access.

Users can manually trigger network reselection. At this time, the UE will add the network where it was previously registered to a temporarily forbidden list, and then reselect a network according to the network selection list.

If the UE receives an indication of roaming prohibition, and the UE is currently accessing a VPLMN, then the UE needs to trigger network reselection.

As can be seen, in the existing network selection technology, the UE typically only obtains services from one network. After the UE selects a network and successfully registers, the UE is in an online state. If the UE triggers network reselection, the UE will select a new network to replace the current network. The UE cannot simultaneously access two or more networks, and thus cannot meet the more flexible and diverse communication needs of the future.

In response to the aforementioned technical issues, the embodiments of this application propose the following technical solutions.

Below, in conjunction with the accompanying drawings, the technical solutions in this application will be described.

In the embodiments of this application, "indication" may include direct indication and indirect indication, and may also include explicit indication and implicit indication. The information indicated by a certain piece of information is referred to as to-be-indicated information. In a specific implementation process, there are many ways to indicate the to-be-indicated information. For example, but not limited to, the to-be-indicated information may be directly indicated, such as the to-be-indicated information itself or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, while other parts of the to-be-indicated information are known or pre-agreed. For example, the to-be-indicated information may also be indicated by using the pre-agreed (for example, as specified in a protocol) sequence of the various pieces of information. In this way, the indication of specific information can be achieved, thereby reducing the indication overhead to some extent. At the same time, the common part of each piece of information can be identified and uniformly indicated, in order to reduce the indication overhead caused by separately indicating the same information.

In addition, the specific indication method may also be various existing indication methods, for example, but not limited to, the aforementioned indication methods and various combinations thereof. For specific details of the various indication methods, reference may be made to the prior art, and details are not described herein again. As can be learned from the foregoing, for example, when it is required to indicate a plurality of pieces of information of a same type, a case in which indication methods of different information are different may occur. In a specific implementation process, a required indication method may be selected according to a specific requirement. The indication method selected in this embodiment of this application is not limited. In this way, the indication method involved in this embodiment of this application should be understood as covering various methods that can enable the to-be-indicated party to learn the to-be-indicated information.

It should be understood that the to-be-indicated information may be sent as a whole, or may be divided into multiple pieces of sub-information and sent separately. In addition, the sending periods and/or sending opportunities of these pieces of sub-information may be the same or may be different. A specific sending method is not limited in this embodiment of this application. These pieces of sub-information may have a sending period and/or a sending opportunity that is predefined. For example, the sending period and/or the sending opportunity may be predefined according to a protocol. Alternatively, the sending period and/or the sending opportunity may be conFIG.d by the transmit end device by sending configuration information to the receive end device.

"Send information" in this application may be understood as sending information by a device to another device, or may be understood as sending information by a logical module in a device to another logical module. For example, "sending information by the network device" may be understood as sending information by the network device to another device (for example, a terminal or another network device), or may be understood as sending information by the logical module 1 in the network device to the logical module 2 in the network device.

In this application, "receiving information" may be understood as receiving, by a device, information from another device, or may be understood as receiving, by a logical module in a device, information from another logical module. For example, "receiving information by the network device" may be understood as that the network device receives information from another device (for example, a terminal or another network device), or may be understood as that the logical module 1 in the network device receives information from the logical module 2 in the network device.

In this application, "sending information to... (for example, a terminal)" or a related schematic diagram in the accompanying drawings may be understood as that a destination end of the information is a terminal. It may include sending information to the terminal directly or indirectly. "Receive information from... (for example, a terminal)" or "receive information from... (for example, a terminal)" or "receive information sent by (for example, a terminal)", or a related schematic diagram in the accompanying drawings may be understood as that a source end of the information is a terminal. It may include receiving information directly or indirectly from the terminal. Necessary processing may be performed between the source end and the destination end, for example, the format change, but the destination end can understand the valid information from the source end. Similar descriptions in this application may be similarly understood, and details are not described herein again.

"Predefined" or "preconFIG.d" may be implemented by pre-storing corresponding code, tables, or other methods that can be used to indicate related information in a device. The embodiments of this application do not impose any limitation on the specific implementation method. Herein, "storing" may refer to storing in one or more memories. The one or more memories may be separately disposed, or may be integrated into an encoder or decoder, a processor, or a communications apparatus. The one or more memories may alternatively be partially disposed separately, and partially integrated into a decoder, a processor, or a communications apparatus. The type of the memory may be any form of storage medium, and the embodiments of this application do not impose any limitation on this.

In the embodiments of this application, the "protocol" mentioned may refer to a standard protocol in the communications field, such as a protocol family, a frame structure similar to a protocol family, or a related protocol applied to a future communications system. The embodiments of this application do not impose any specific limitation on this.

In the embodiments of this application, the "when...," "in the case of...," "if," and "when" descriptions all refer to a situation in which a device performs corresponding processing under certain objective conditions. These descriptions do not impose any limitation on time, nor do they require that the device must have a judgment action when implementing the processing, or imply the existence of other limitations.

In the description of this embodiment of this application, unless otherwise specified, "/" indicates that associated objects are in an "or" relationship. For example, A/B may represent A or B. In this embodiment of this application, "and/or" is merely an association relationship for describing associated objects, and indicates that three relationships may exist. For example, A and/or B may indicate that only A exists, both A and B exist, and only B exists. A and B may be a singular number or a plural number. In addition, in the descriptions of the embodiments of this application, unless otherwise specified, "a plurality of" means two or more than two. "At least one of the following" or a similar expression thereof refers to any combination of these items, including any combination of a single item or a plural item. For example, at least one (one) of a, b, or c may represent: a, b, c, a-b, a-c, b-c, or a-b-c, where a, b, and c may be one or more. In addition, for ease of clearly describing the technical solutions in the embodiments of this application, in the embodiments of this application, words such as "first" and "second" are used to distinguish same items or similar items with basically same functions and functions. A person skilled in the art may understand that the words "first" and "second" do not limit a quantity and an execution sequence, and the words "first" and "second" do not necessarily limit a difference. In addition, in this embodiment of this application, words such as "example" or "for example" are used to represent an example, an example, or a description. Any embodiment or design solution described as "example" or "for example" in the embodiments of this application should not be interpreted as being more preferred or advantageous than other embodiments or design solutions. Specifically, the use of the words "example" or "e.g." is intended to present the relevant concepts in a concrete manner for ease of understanding.

The network architecture and the service scenario described in the embodiments of this application are intended to describe the technical solutions in the embodiments of this application more clearly, but do not constitute a limitation on the technical solutions provided in the embodiments of this application. A person of ordinary skill in the art may know that with evolution of the network architecture and emergence of a new service scenario, The technical solutions provided in the embodiments of this application are also applicable to similar technical problems.

For ease of understanding the embodiments of this application, a communications system applicable to the embodiments of this application is first described in detail by using a communications system as an example.

FIG. 6 and FIG. 7 are schematic architectural diagrams of a communications system. As shown in FIG. 6 and FIG. 7, the communications system mainly comprises a network device and a terminal.

The communications system 10 comprises a radio access network (radio access network, RAN) 100 and a core network (core network, CN) 200. The network device may be specifically a network element in the core network 200. The network device may be a data management network element, for example, a UDM in 5G, or a future communications system, or may be any network element/function/entity conFIG.d to implement a related function such as data management or storage. This is not specifically limited. Alternatively, the network device may be a policy control network element, such as a PCF, or in a future communications system, or may be any network element/function/entity conFIG.d to implement a related function such as policy management or control. This is not specifically limited. Alternatively, the network device may be an access and mobility management network element, such as an AMF, or in a future communications system, or may be any network element/function/entity conFIG.d to implement a related function such as access and mobility management. This is not specifically limited.

A terminal may also be referred to as a terminal device, user equipment (user equipment, UE), a mobile station, a mobile terminal, or the like. The terminal can be widely applied in various scenarios, such as device-to-device (device-to-device, D2D) communication, vehicle-to-everything (vehicle to everything, V2X) communication, machine-type communication (machine-type communication, MTC), the Internet of Things (internet of things, IOT), virtual reality, augmented reality, industrial control, autonomous driving, telemedicine, smart grids, smart furniture, smart offices, smart wearables, smart transportation, smart cities, and the like. The terminal may be a mobile phone, a tablet computer, a computer with a wireless transceiver function, a wearable device, a vehicle, an unmanned aerial vehicle, a helicopter, an airplane, a ship, a robot, a robotic arm, a smart home device, or the like. The embodiments of this application do not limit a device form of the terminal.

The terminal can also be understood as a terminal device that has multiple subscription data records. This terminal device may have multiple SIM card modules, and each module may correspond to one subscription data record. There is an association relationship between the subscription data records. For example, two subscription data records may be associated with the same user. The terminal may be a user equipment with multiple SIM cards, or may be a system integrating multiple sets of user equipment. Each set of user equipment has a SIM card module and a communications module, and can establish a connection with a network.

In a communications system, a terminal and a network may establish a multi-connection. A multi-connection requires that the terminal can simultaneously access a plurality of networks through multiple 3GPP access type connections. In other words, the terminal can simultaneously establish 3GPP access type connections with a plurality of networks. For example, if the multi-connection is a dual connection, in a future network evolution process, due to further requirements for bandwidth or coverage, the terminal may need to simultaneously access a network through two 3GPP access type connections. In this case, the dual connection may have a plurality of combinations of radio access technology types. For example, terrestrial network (terrestrial network, TN) +TN, or TN+non-terrestrial network (non-terrestrial network, NTN), or after a future 6G network application, the dual connection may also be a combination of networks of different standards, such as 5G+6G or 6G+satellite, and the like.

It can be understood that a multi-connection can also be expressed as: supporting dual (or multiple) radio capabilities (dual/Multiple radio capability), supporting dual (or multiple) 3GPP access technologies (Dual/Multiple 3GPP RAT), supporting dual (or multiple) steering capabilities (Dual/Multiple steer), supporting dual (or multiple) 3GPP access (Dual/Multiple 3GPP), supporting dual (or multiple) 3GPP access types (Dual/Multiple 3GPP access type), supporting dual (or multiple) registrations (Dual/Multiple Registration), supporting the same access type (same access type), supporting the same access technology (same RAT), supporting the same access network (same access network), etc. In other words, supporting one or more of the above can be understood as being capable of establishing a multi-connection.

Establishing a multi-connection between a terminal and a network can also be understood as follows: The terminal device establishes connections with the network through the multiple subscription data it possesses. For example, if a multi-connection refer to dual connectivity, a terminal device may have two SIM card modules, each corresponding to one subscription data. The terminal device establishes connections with the network through the two SIM card modules. Alternatively, a terminal device may integrate two sets of user equipment, each set having one subscription data. Each set of user equipment establishes a connection with the network through its subscription data. Alternatively, a terminal device may integrate two sets of user equipment, each set having one subscription data. Each set of user equipment establishes a connection with the network through its subscription data. At this point, the terminal device as a whole establishes two connections with the network. At this point, it can be considered that the terminal device has established dual connectivity with the network.

In a communications system, there may be various ways to trigger the establishment of a multi-connection. The following are specific examples:

### 1) Triggering through a network list:

With reference to the existing SOR procedure, it may be considered that when the network delivers a new network list (or a network selection list) to the terminal, the terminal may be triggered to establish a multi-connection. To distinguish the new network list from the existing network selection list, the new network list may be a network selection list specially used for establishing a multi-connection, and may be distinguished from the existing network selection list by using an additional indication or a name of the network list.

For example, the terminal may trigger an SOR procedure in a registration procedure, so as to deliver the network list to the terminal by using the SOR procedure.

In the registration process, the terminal can actively report its capability information, for example, whether the terminal supports a multi-connection. Alternatively, in a registration procedure of the terminal, the data management network element may determine, based on the subscription data of the terminal, whether the network can provide a multi-connection service for the terminal, that is, whether the terminal subscribes to a multi-connection service. Alternatively, in a registration procedure of the terminal, the data management network element may determine whether a network slice requested by the terminal requires a multi-connection service. On this basis, if at least one of the following conditions is met: the terminal supports a multi-connection, the terminal subscribes to a multi-connection service, or a network slice requested by the terminal requires a multi-connection service, and the subscription data of the terminal indicates that the terminal has not currently established a multi-connection, In this case, the data management network element may send the network list to the terminal by using the SOR procedure in the registration procedure, so as to trigger the terminal to establish a multi-connection. For example, the terminal may perform network selection by using a network list, so as to ensure that the terminal accesses a current network and also accesses a network selected from the network list, thereby implementing establishment of a multi-connection.

Optionally, the data management network element may further notify the terminal of a policy for establishing a multi-connection through the SOR procedure. For example, the policy may include a combination of wireless access technology types for the multi-connection, and a time and/or area in which the multi-connection are allowed to be established. If the data management network element does not notify the terminal of the policy for establishing a multi-connection, it indicates that the network does not impose any policy restrictions on the terminal for establishing a multi-connection, and the terminal can make its own decision to establish a multi-connection.

For another example, the terminal may trigger the SOR procedure after the registration procedure, in order to deliver the network list to the terminal through the SOR procedure.

Considering that the establishment of a multi-connection by the terminal does not need to be bound to the registration procedure of the terminal, after the terminal normally completes the registration procedure, the data management network element may trigger the SOR procedure at any possible time point, to send the network list to the terminal, in order to trigger the terminal to establish a multi-connection. For example, the data management network element may send the network list to the terminal through the SOR procedure, when certain preset conditions are met (for example, the terminal needs to establish a multi-connection in an area, and/or the current time is a time when the multi-connection need to be established), and the terminal has not yet established the multi-connection.

### 2) Triggered by indication:

In the aforementioned method of "triggering through a network list," the network list inherently possesses the function of indicating to the terminal that it needs to establish a multi-connection. In other words, the network list can be used to implicitly indicate to the terminal that it needs to establish a multi-connection. In other words, this method is applicable in situations where the establishment of a multi-connection requires the delivery of a network list used for establishing a multi-connection. In other words, the establishment of a multi-connection has a prerequisite assumption, namely, that the terminal needs to perform network selection based on the delivered network list and then access the selected network, thereby establishing a multi-connection. If the terminal does not require a new network list to establish a multi-connection, or in other words, the terminal does not need to dynamically deliver a network list, such as when the terminal has a network list preconFIG.d locally for establishing a multi-connection, then the data management network element does not need to deliver the network list to the terminal. Instead, it can simply deliver an indication to the terminal to trigger the terminal to establish a multi-connection. Alternatively, the terminal can decide on its own to trigger the establishment of a multi-connection.

For example, the data management network element may determine that the terminal needs to establish a multi-connection, for example, in an area where the terminal needs to establish a multi-connection due to terminal movement, and/or in the current time when the terminal needs to establish a multi-connection, and the terminal has not yet established the multi-connection,

For another example, the terminal may provide the user with a function of enabling or disabling a multi-connection. If the user operation enables the multi-connection, the terminal may respond to the operation of the user, and decide by itself to trigger establishment of the multi-connection. Afterwards, if the user operates to disable the multi-connection, the terminal may respond to the user operation, trigger release of the multi-connection, and restore to a single connection to the network, that is, establish a connection of a 3GPP access type or a non-3GPP access type to a network.

### 3) Triggered by services:

Compared with single connections, a multi-connection provides higher bandwidth. Therefore, the establishment of a multi-connection can also be triggered by services.

For example, when the terminal uses a specific service, if the service requires a high bandwidth, the terminal may trigger establishment of a multi-connection, so as to obtain a higher bandwidth.

The terminal may trigger, based on the policy information, the terminal to establish a multi-connection. The policy information may be a URSP rule, or any possible routing rule or policy, which is not limited. The URSP rule can be enhanced to include an indication for establishing a multi-connection and a policy for establishing the multi-connection. When the terminal determines that a session needs to be established for a service (which may be a service that has a high bandwidth requirement), if the service matches the URSP rule, the terminal triggers a multi-connection establishment according to an indication of the URSP rule. Alternatively, in a process of establishing a session, the terminal may report, to a data management network element or a policy control network element, single network slice selection assistance information (single network slice selection assistance information, S-NSSAI) and a data network name (data network name, DNN) that are corresponding to the session of the terminal. If the service corresponding to the S-NSSAI and the DNN is a service for which a multi-connection needed to be established, the data management network element or the policy control network element may instruct the terminal to establish the multi-connection.

For another example, when a bandwidth that can be provided by a current network cannot meet a service requirement of a terminal, the network may determine to trigger the terminal to establish a multi-connection, so as to obtain a higher bandwidth.

If the access network device finds that the service of the terminal cannot be ensured, for example, the bandwidth that can be provided by the access network device cannot meet the bandwidth requirement of the service, the access network device may report the situation to the data management network element by using the access and mobility management network element. Alternatively, if the access and mobility management network element finds that the service of the terminal cannot be guaranteed, for example, when the terminal currently moves to a low-signal area, signal quality of the terminal cannot be guaranteed, the access and mobility management network element may report the situation to the data management network element. In this way, the data management network element may instruct the terminal to establish the multi-connection.

The following further describes the communication method and apparatus in the embodiments of this application with reference to the accompanying drawings. It may be understood that, in this application, an example in which the network device and the terminal are used as execution bodies of the interaction illustration is used as an example for description. However, this application does not limit the execution bodies of the interaction illustration. For example, the method performed by the network device in this application may alternatively be performed by a module (for example, a chip, a chip system, or a processor) applied to the network device, or may alternatively be implemented by a logical node, a logical module, or software that can implement all or some functions of the network device. A method performed by the terminal in this application may alternatively be performed by a module (for example, a chip, a chip system, or a processor) applied to the terminal, or may alternatively be implemented by a logical node, a logical module, or software that can implement all or some functions of the terminal.

The following describes in detail an interaction procedure between network elements/devices in the foregoing communications system by using a method embodiment. The communication method provided in the embodiments of this application may be applicable to the foregoing communications system, and is specifically applied to various scenarios mentioned in the foregoing communications system. The following describes the communication method in detail.

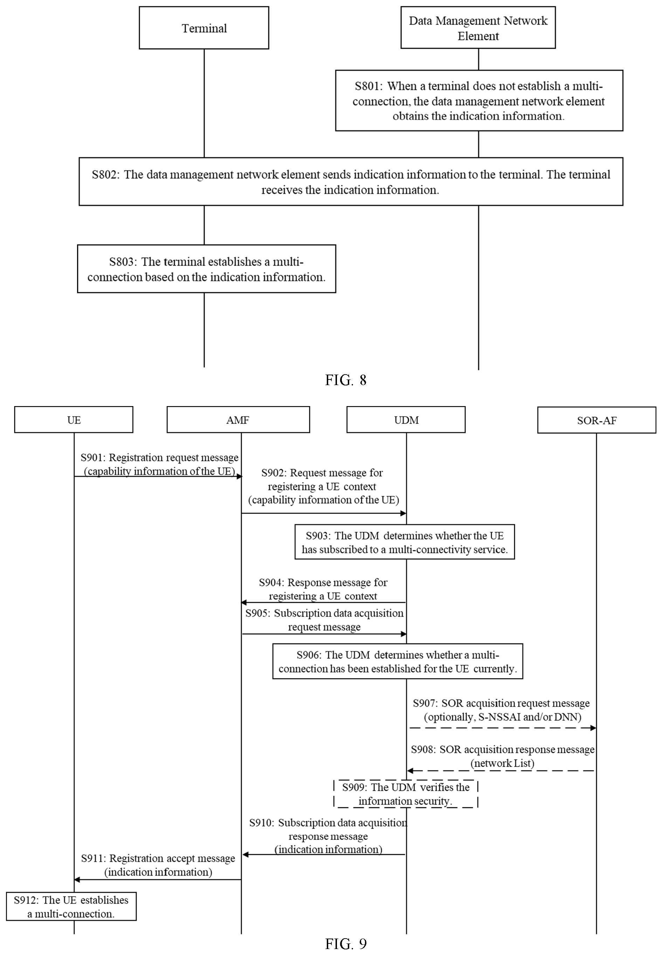

FIG. 8 is a schematic flowchart 1 of a communication method according to an embodiment of this application. The communication method is applicable to the foregoing communications system, and mainly involves interaction between a data management network element and a terminal.

S801: When a terminal does not establish a multi-connection, a data management network element obtains indication information.

The multi-connection may mean that a plurality of connections of a 3GPP access type are established at the same time, and the connections of the 3GPP access type belong to a same network or different networks. In other words, the multi-connection may also mean that a connection of a 3GPP access type is established with one or more networks at the same time. In other words, multiple 3GPP access types are used to access the same or different networks. The plurality of networks may be different operator networks, for example, different PLMNs, or may be different non-public networks (non-public network, NPN), or may be different PLMNs and NPNs, or may be any other possible network, such as WLAN and PLMN. For example, a PLMN is used as an example. When the terminal accesses and registers with the PLMN#1 by using the 3GPP access type, the terminal further accesses and registers with the PLMN#2 by using the 3GPP access type. In this case, this means that the terminal establishes a connection of a 3GPP access type to both the PLMN #1 and the PLMN #2, that is, establishes a plurality of connections. For another example, using the NPN as an example, when the terminal accesses and registers with the NPN#1 by using the 3GPP access type, the terminal further accesses and registers with the NPN#2 by using the 3GPP access type. In this case, this means that the terminal establishes a connection of a 3GPP access type to both the NPN#1 and the NPN#2. For another example, using the NPN and the PLMN as an example, when the terminal accesses and registers with the NPN by using the 3GPP access type, the terminal further accesses and registers with the PLMN by using the 3GPP access type. In this case, this means that the terminal establishes a connection of a 3GPP access type to both the NPN and the PLMN.

The indication information may be used to indicate that the terminal needs to establish a multi-connection.

In a possible implementation, the indication information may explicitly indicate that the terminal needs to establish a multi-connection. For example, the indication information may include a 1-bit (bit) indication information element. If a value of the indication information element is 1, it indicates that the terminal needs to establish a multi-connection, and if a value of the indication information element is 0, it indicates that the terminal does not need to establish a multi-connection.

In another possible implementation, the indication information may also implicitly indicate that the terminal needs to establish a multi-connection. For example, the indication information may be used to indicate a network list.

The plurality of networks indicated by the network list are networks that can be used to establish a multi-connection, and the new network list may be a network selection list dedicated to establishing a multi-connection. In other words, the network list may be a network selection list dedicated to establishing a multi-connection. It may be distinguished from an existing network selection list by using an additional indication or a name of the network list, and the terminal selects and accesses a network from the network list, so as to establish a multi-connection. Optionally, the plurality of networks indicated by the network list do not include a network currently accessed by the terminal, so as to avoid a multi-connection establishment failure caused by the terminal continuing to select a network currently accessed by the terminal. For example, a network currently accessed by the terminal is a PLMN #1, and the network list may include a PLMN #2, a PLMN #3, and a PLMN #4. Certainly, the plurality of networks indicated by the network list may also include a network currently accessed by the terminal, for example, include an identifier of the network currently accessed by the terminal. In this case, the terminal may not select the currently accessed network by default.

In this case, because the network list has a function of indicating that the terminal needs to establish a multi-connection, the indication information may implicitly indicate, by indicating the network list, that the terminal needs to establish a multi-connection. For example, the indication information may carry information used to indicate a network list, for example, an identifier of the network list. Different from an existing network selection list, the network list indicated by the identifier may be a network list specially used for a multi-connection, that is, the identifier of the network list may be distinguished from an identifier of an existing network selection list, and may be understood as the foregoing "additional indication or a name of the network list". For example, the identifier of the existing network selection list is ID#1. An identifier of the network list in this embodiment of this application is an ID#2. When receiving the indication information, the terminal may learn that the identifier of the network list carried in the indication information indicates the network list used to establish the multi-connection, so as to learn that the terminal needs to establish the multi-connection.

Optionally, the network list may further indicate that a plurality of networks support a type of a radio access technology subscribed by the terminal, and these radio access technology types may be different. For example, a type of a radio access technology subscribed by the terminal supported by the PLMN#2 is TN. The PLMN #3 supports the type of the radio access technology subscribed by the terminal as TN and NTN, and the PLMN #4 supports the type of the radio access technology subscribed by the terminal as NTN. For another example, the PLMN #2 supports the type of the radio access technology subscribed by the terminal as 5G. PLMN #3 supports 5G and 6G radio access technologies subscribed by the UE, and PLMN #4 supports 6G radio access technologies subscribed by the UE. This prevents a multi-connection setup failures caused by unsupported radio access technologies.

Optionally, the indication information may further carry a network list, or may not carry a network list. For example, the network list may be preconFIG.d locally on the terminal.

It may be understood that the foregoing two implementations may also be implemented in combination. The indication information may not only carry the foregoing indication information element, but also carry the foregoing network list identifier and the foregoing network list. This is not specifically limited.

Optionally, the indication information may be further used to indicate a multi-connection establishment policy, for example, including at least one of a service policy, an access type policy, a location policy, or a time policy.

The service policy may refer to that the multi-connection needs to be established when the service requirements cannot be met by the network (unless otherwise specified, the following can be regarded as a network) that the terminal accesses to, that is, the multi-connection is established according to the service requirements and avoid redundancy. For example, the service policy may be a service threshold. If the service policy exceeds the threshold, it is considered that the network cannot meet the service requirement, and a multi-connection establishment needs to be triggered. For example, the service threshold may be a delay threshold, in this case, if a transmission delay of the service (such as the transmission delay over the air interface or the transmission delay from the user plane anchor point to the terminal) exceeds the threshold, the current network cannot meet service requirements, for example, network congestion occurs. For another example, the service threshold may also be a threshold of a parameter such as bandwidth and a packet loss rate. In this case, if the bandwidth that can be provided by the network for the service is less than the bandwidth threshold, and/or the packet loss rate of the service is greater than the packet loss rate threshold, the current network cannot meet service requirements. Certainly, the foregoing implementation of the service threshold is some examples, and is not intended as a limitation on this embodiment of this application. Any parameter that may be used to evaluate whether the network can meet the requirement of the service may be considered as the threshold in this embodiment of this application. such as the waiting duration of the service data packet and the number of retransmission times of the service data packet.

Access type policy refers to the combination of wireless access technology types required to establish a multi-connection. For example, in the case where the multi-connection refers to dual connectivity, the combination of wireless access technology types can be TN+TN, or TN+NTN, or in the case of future 6G network applications, dual connectivity can also be a combination of networks with different standards, such as 5G+6G or 6G+satellite, etc. Of course, in the case where the multi-connection refers to three or more 3GPP access type connections, the combination of wireless access technology types can be even more diverse, such as TN+TN+TN, or TN+TN+NTN, or NTN+NTN+NTN, or 4G+5G+6G, or 5G+6G+satellite, etc. These combinations can be arbitrarily arranged according to actual needs, and so on, without further elaboration. In this way, the decoupling of access resources can be achieved, that is, different wireless access technology type connections use different network resources, avoiding the situation where all connections use the same wireless access technology type, which could lead to network resource shortages.

The location policy refers to the requirement that a multi-connection need to be established within a preset area. For example, this may be a low-signal area where communication signal enhancement is required, in order to ensure the communication quality of users within this area. For example, the location policy may include information used to indicate the location of the preset area, such as information that can be recognized by the network, such as the identifier of a cell, or it may also be any other possible location information, such as latitude and longitude information.

The time policy refers to the requirement that a multi-connection need to be established within a preset time period. For example, this may be a time period with high business demand, in order to ensure the business experience within this time period. For example, the time policy may include information used to indicate the preset time period. For example, the preset time period may be a periodic time period, and the information used to indicate the preset time period may include information about the interval duration between adjacent periods, and information about the time period within each period when a multi-connection needed to be established. For example, this may be a time period from t1 to t2 after the start time of each period, or it may be a time period from t1 to t2 before the end time of each period.

It can be understood that if the indication information indicates the foregoing policy for establishing a multi-connection, it indicates that the subsequent terminal needs to establish a multi-connection as necessary according to the indication. If the indication information does not indicate the foregoing policy for establishing a multi-connection, it indicates that the network does not impose policy restrictions on the terminal establishing a multi-connection, and the terminal can make its own decision to establish a multi-connection.

It can also be understood that, as an example, if the terminal has not established a multi-connection, the terminal triggers the establishment of the multi-connection. This is not a limitation. The terminal may establish a multi-connection without considering whether the multi-connection has already been established. For example, the terminal may continue to establish a multi-connection even if the multi-connection has already been established, such as, if the already established a multi-connection include two connections of 3GPP access types, the terminal may continue to establish the multi-connection, for example, increasing to three connections of 3GPP access types. Alternatively, if the terminal has already established a multi-connection, the terminal may, according to the solution of the present invention, trigger the UE to change the network of the connection.

S802: The data management network element sends indication information to the terminal. The terminal receives the indication information.

It can be understood that the data management network element sending to the terminal may include the data management network element sending to the terminal through different core network devices and/or access network devices. The type of the sent message and the parameter format may be the same or different. It can be understood that as long as the content sent serves the same function, it can be understood as the data management network element sending to the terminal.

S803: The terminal establishes a multi-connection based on the indication information.

In summary, since on the network side, that is, the data management network element can provide indication information for a multi-connection, the terminal can trigger, based on the indication information, the simultaneous establishment of 3GPP access-type connections with a plurality of networks. In other words, the terminal can simultaneously access and register with a plurality of networks, thereby meeting the terminal's more flexible and diverse communication needs.

Below, each step will be introduced separately.

S801:
There may be various ways for a data management network element to obtain indication information. For example, the data management network element may obtain the indication information based on a report from the terminal. Alternatively, the data management network element may obtain the indication information based on a report from another network element on the network side. Alternatively, the data management network element may decide on its own to obtain the indication information. The following provides a detailed description of each method.

Method 1: The terminal may send capability information of the terminal to the network. Correspondingly, the data management network element may obtain the capability information of the terminal, and obtain the indication information based on the capability information of the terminal.

The capability information of the terminal (or the multi-connection capability of the terminal) can be used to indicate whether the terminal supports simultaneously establishing 3GPP access type connections with a plurality of networks, respectively. In other words, whether the terminal supports a multi-connection can be determined, to avoid wasting communication resources due to the indication of the terminal to establish a multi-connection when the terminal does not support the multi-connection. For example, the capability information of the terminal may be an information element of one bit, and the two values of 0 and 1 of the information element are used to respectively indicate whether the terminal supports simultaneously establishing 3GPP access type connections with a plurality of networks, respectively.

The capability information of the terminal may be reported to the network through a registration procedure. For example, in a terminal registration process, the terminal may send a registration request message to the access and mobility management network element. The registration request message may carry a registration type (registration type) and identification information (such as SUCI, 5G-GUTI, or PEI) of the terminal. The registration type may be the following types: initial registration, mobility registration update, periodic registration update, or emergency registration. Alternatively, the registration type may be a newly defined registration type, such as a multi-connection registration and dual-connection registration, or may be any registration type that may be named. The registration type indicates that the terminal needs to establish a multi-connection after registration, that is, the network may be triggered to obtain and deliver the indication information.

The capability information of the terminal may be carried in the registration request message as an independent information element, or may be carried in the registration request message as an information element in a radio capability report of the terminal. After receiving the capability information of the terminal, the access and mobility management network element may report the capability information of the terminal to the data management network element when registering the context of the terminal with the data management network element. In other words, in a terminal registration process, the data management network element may receive a context registration request message from the access and mobility management network element, where the context registration request message comprises the capability information of the terminal, that is, an existing registration procedure is reused to implement sensing of the multi-connection capability of the terminal; or It can also be implemented through a newly defined process, which is decoupled from an existing process and allows more flexible cell transfer.

The data management network element may determine, based on the capability information of the terminal, that the terminal supports a multi-connection, and whether the terminal has not established the multi-connection, to obtain the indication information. For example, since the terminal needs to register in the network and the context of the terminal needs to be stored in the data management network element, the data management network element may make a judgment based on the context of the terminal. For example, if the data management network element currently stores one context of the terminal, it indicates that the terminal is currently accessing and registering with one network, and it can be considered that the terminal has not established a multi-connection at present. If the data management network element currently stores two or more contexts of the same terminal, it indicates that the terminal is currently accessing and registering with a plurality of networks simultaneously. It can be considered that the terminal has established a multi-connection at present, and there is no need to perform the subsequent process of the embodiments of this application.

The data management network element may obtain the indication information from the data management network element locally. That is, the information carried in the indication information, such as an indication information element, a network list, and the like, may be preconFIG.d in the data management network element locally in advance. The data management network element may obtain the network list and other information from the local, encapsulate the information, and obtain the indication information, so as to avoid communication overheads caused by obtaining the network list from another network element.

Alternatively, the data management network element may obtain the indication information from another network element. For example, the data management network element obtains the indication information from the application function. Specifically, if it is necessary to dynamically deliver a network list, the data management network element sends a request message to the application function network element, such as the SOR-AF. For example, the SOR obtains the request (Nsoraf_SoR_Get request) message. The request message may be used to request the application function network element to provide a network that can be used to establish a multi-connection. Accordingly, the application function network element may receive the request message, and based on the request message, send a response message, such as the SOR obtaining the response (Nsoraf_SoR_Get response) message. The response message may include a network list, which may specifically be indication information containing the network list. For example, the application function network element may, based on the request message, search locally for information about a network that can support the establishment of a multi-connection, and determine the network list based on this network information, such as the network identifier (PLMN ID), the type of radio access technology that the network supports for terminal subscription, etc. Then, the application function network element determines the network list, further determines the indication information, and then carries the indication information into the response message, and sends the response message to the data management network element. Accordingly, the data management network element may receive the response message returned by the application function network element based on the above request message, and thus obtain the indication information.

Optionally, in a case in which the data management network element requests the network list from the application function network element, the data management network element may further send, to the application function network element, the slice information and/or the data network name corresponding to the session of the terminal. The slice information mentioned in the embodiments of this application may be an S-NSSAI, or may be replaced with any possible naming or information type, which is not specifically limited. The data network name mentioned in the embodiments of this application may be a DNN, or may be replaced with any possible naming or information type, which is not specifically limited either. The slice information and/or the data network name may be stored in advance in the subscription data of the terminal that is locally stored in the data management network element. In this case, the data management network element carries the slice information and/or the data network name in the request message to send to the application function network element. Alternatively, the slice information and/or the data network name may be sent to the application function network element through another message, which is not specifically limited. Correspondingly, the application function network element may further receive the slice information and/or the data network name corresponding to the session of the terminal. In this case, the application function network element may further determine the network list based on the information about the plurality of networks that support the slice information and/or the data network name. That is, the application function network element may further determine, from the information about the plurality of networks that support the establishment of the multi-connection with the terminal and that is locally stored in the application function network element, the information about the plurality of networks that support the slice information and/or the data network name, and determine the network list based on the information about the plurality of networks that support the slice information and/or the data network name. This ensures that the network that establishes the multi-connection with the terminal can provide the same service as the network that the terminal currently accesses, to meet the service requirements of the terminal.

It may be understood that, for the terminal preconFIG.s the network list locally, that is, the indication information does not include the network list, the terminal may be conFIG.d to select a plurality of networks (or select an additional network) by using the local network list only in a case in which the indication information is received. so as to establish a multi-connection, otherwise, processing should be performed according to logic in the prior art.

Manner 2: The terminal may send the slice information of the terminal to the network. Correspondingly, the data management network element may obtain the slice information requested by the terminal, and obtain the multi-connection related information based on the slice corresponding to the multi-connection service in the network slice.

The slice information requested by the terminal can be used to indicate a network slice requested by the terminal, for example, a same network slice or different network slices. For example, the terminal may indicate, in a registration request message, that the S-NSSAI#1 and/or the S-NSSAI#2 is requested to be used.

The slice information requested by the terminal can also be reported to the network through the registration procedure. For example, in a registration process of the terminal, the terminal may send, to the access and mobility management network element, a registration request message that carries the slice information requested by the terminal. For a registration type carried in the registration request message, refer to the related description of the foregoing Manner 1. Details are not described herein again. After receiving the slice information requested by the terminal, the access and mobility management network element may report the capability information of the terminal to the data management network element when registering the context of the terminal with the data management network element. In other words, in a terminal registration process, the data management network element may receive a context registration request message from the access and mobility management network element, where the context registration request message comprises slice information requested by the terminal, that is, an existing registration procedure is reused to implement awareness of a multi-connection requirement of the terminal; or it can also be implemented through a newly defined process, which is decoupled from the existing process and allows more flexible cell transfer.

The data management network element may determine, based on the correspondence between a network slice and a service, whether the network slice corresponding to the service that requires establishment of a multi-connection exists in the network slice requested by the terminal (or, in other words, the network slice corresponding to the multi-connection service). For example, if the service that requires establishment of a multi-connection is an extended reality media service (extended reality media services, XRM), the XRM service has a relatively high requirement for bandwidth. Therefore, a multi-connection needs to be established to ensure a large bandwidth, so as to meet the bandwidth requirement corresponding to the XRM service. In this case, the XRM service may also be understood as a multi-connection service. Of course, the XRM service is merely an example, and is not intended to be limiting. The embodiments of this application do not limit a specific service form of the multi-connection service. If the network slice requested by the terminal comprises the network slice corresponding to the multi-connection service, and the terminal has not established a multi-connection, the data management network element may obtain the indication information. For a specific obtaining manner, refer to the related descriptions of the foregoing manner 1. Details are not described herein again.

Method 3: The data management network element can obtain the subscription data of the terminal, and based on this subscription data, obtain relevant information about the multi-connection.

The subscription data of the terminal refers to the relevant data obtained by the terminal in advance when it subscribes to network services. This data can be pre-stored in the data management network element. If the subscription data of the terminal comprises information used to indicate that the network can provide the terminal with the multi-connection services, it means that the terminal is a user who has subscribed to the multi-connection services, or that the terminal has subscribed to the multi-connection services. This is done to avoid communication redundancy caused by sending a multi-connection related information to users who have not subscribed to such services. If the subscription data of the terminal does not include information used to indicate that the network can provide the terminal with the multi-connection services, it means that the terminal has not subscribed to the multi-connection services. Of course, this information can also be a 1-bit information element. By default, the subscription data of the terminal comprises this information. In this case, the two possible values of 0 or 1 for this information can be used to indicate whether the terminal has subscribed to the multi-connection services. Alternatively, if the subscription data of the terminal comprises information about a service that requires the establishment of a multi-connection, such as an XRM service, it can also be considered that the terminal has subscribed to the multi-connection services.

The data management network element can obtain the subscription data of the terminal during the registration process of the terminal. For example, during the registration process of the terminal, the access and mobility management network element may send a subscription data acquisition request message to the data management network element, in order to request the subscription data of the terminal with the network. Correspondingly, the data management network element may receive the subscription data acquisition request message from the access and mobility management network element, and obtain the subscription data of the terminal according to the subscription data acquisition request message. In this way, the data management network element can determine whether the subscription data of the terminal comprises information used to indicate that the network can provide the terminal with a multi-connection service, or determine the value of the information. That is, the existing registration procedure is reused to implement awareness of the subscription data of the terminal, or a newly defined procedure may be used to implement this, which is decoupled from the existing procedure, and the transfer of information elements can be more flexible. If the subscription data of the terminal comprises information used to indicate that the network can provide the terminal with a multi-connection service, or if it is determined that the value of the information indicates that the terminal has subscribed to the multi-connection service, and the terminal has not established the multi-connection, then the data management network element can obtain the indication information. For a specific obtaining manner, refer to the related description of the foregoing manner 1. Details are not described herein again.

Method 4: The data management network element may receive service information from the access and mobility management network element, and obtain indication information based on the service requirement of the terminal not being met.

The service information is used to indicate that the service requirement of the terminal is not met. For example, the network currently accessed by the terminal (which can be understood as a network without special explanation) cannot provide a bandwidth for the terminal that meets the bandwidth requirement of the terminal's service. And/or, the signal quality of the terminal cannot meet the signal quality requirement of the terminal's service. Or, there may be any other possible situation, which is not limited. In this case, the network currently accessed by the terminal needs to be triggered to establish a multi-connection to provide additional network resources, in order to meet the service requirement of the terminal. For example, the service information may be a bitmap of multiple bits, and by using different value combinations of the bitmap, various situations in which the service requirement of the terminal is not met can be indicated. For example, the bitmap is 2 bits, where 00 indicates that the bandwidth provided by the network currently accessed by the terminal for the terminal cannot meet the bandwidth requirement of the terminal's service; 01 indicates that the signal quality of the terminal cannot meet the signal quality requirement of the terminal's service; 10 indicates that the bandwidth provided by the network for the terminal cannot meet the bandwidth requirement of the terminal's service, and the signal quality of the terminal also cannot meet the signal quality requirement of the service of the terminal; and 11 is reserved. For another example, the service information may be an enumerated type of multiple bits, where a value of each bit corresponds to a situation in which the service requirement of the terminal is not met.

Business information can be reported by the access network device to the data management network element through the access and mobility management network element. Alternatively, the access and mobility management network element can directly report the business information to the data management network element. Here, the access network device or the access and mobility management network element is a network element within the network currently accessed by the terminal.

For example, when the access network device determines that the bandwidth it can provide for the terminal cannot meet the bandwidth requirements of the terminal's services, the access network device may send an N2 message to the access and mobility management network element. The N2 message comprises business information, which is used to indicate that the bandwidth provided by the network currently accessed by the terminal cannot meet the bandwidth requirements of the terminal's services. Accordingly, the access and mobility management network element may receive the N2 message from the access network device and send the business information to the data management network element. At this point, the business information may be carried in any possible message that is exchanged between the access and mobility management network element and the data management network element. Alternatively, the access network device may not be aware of the total bandwidth requirement of the terminal. In this case, the access network device may report the current bandwidth that it can provide to the access and mobility management network element when the bandwidth requested by the service exceeds the bandwidth that the access network device itself can provide. The access and mobility management network element can then calculate the difference between the total bandwidth requirement of the terminal and the bandwidth that can currently be met, which is the additional bandwidth provided for the terminal.

For another example, the access and mobility management network element may perform mobility management on the terminal, to determine whether the terminal moves to a low-signal area. The low-signal area may be preconFIG.d in the access and mobility management network element. The low-signal area may be an area at a cell granularity, for example, including one or more cells, and may be represented by using a cell identifier, or the low-signal area may be an area demarcated by longitude and latitude information. This is not limited. If the terminal currently moves to a low-signal area, the access and mobility management network element may obtain service information according to the location of the terminal in the low-signal area, for example, locally obtain preconFIG.d service information or locally generate service information, and send the service information to the data management network element. In this case, the service information may be carried in any possible message exchanged between the access and mobility management network element and the data management network element, to indicate that the signal quality of the terminal cannot meet the signal quality requirement of the service of the terminal for the signal quality.

It may be understood that the access and mobility management network element may also obtain the service information with reference to the service information reported by the access network device. For example, the service information reported by the access network device indicates that bandwidth provided by the access network device for the terminal cannot meet a bandwidth requirement of a service of the terminal. In addition, in this case, the access and mobility management network element also determines that the terminal moves to a low-signal area, and the access and mobility management network element may generate an indication for indicating that bandwidth provided by a network currently accessed by the terminal to the terminal cannot meet a bandwidth requirement of a service of the terminal for bandwidth. In addition, the signal quality of the terminal cannot meet the signal quality requirement of the service of the terminal for the service information.

When the data management network element obtains service information, the data management network element may obtain indication information based on the service information and the fact that the terminal has not established a multi-connection. For a specific obtaining method, refer to the related description of the method 1 above, and details are not described herein again.

In addition, in method 4, the access and mobility management network element may also be replaced with a session management network element, such as a session management network element in a network currently accessed by the terminal. For example, the session management network element may subscribe to the bandwidth provided by the network currently accessed by the terminal for the terminal from the access and mobility management network element. The subscription of the session management network element may be based on the subscription of the session management network element, the access network device may obtain, from the access network device, the bandwidth provided by the network currently accessed by the terminal for the terminal, and return the bandwidth to the session management network element through a subscription response. If the session management network element determines that the bandwidth provided by the network currently accessed by the terminal for the terminal cannot meet the bandwidth requirement of the terminal's service for the bandwidth, for example, the bandwidth requirement of the session managed by the session management network element for the terminal's session, then the session management network element may obtain service information, for example, obtain preconFIG.d service information from a local device or generate service information locally, and send the service information to the data management network element. At this time, the service information may be carried in any possible message that is exchanged between the session management network element and the data management network element, to indicate that the bandwidth provided by the network currently accessed by the terminal for the terminal cannot meet the bandwidth requirement of the terminal's service for the bandwidth.

It can also be understood that the above uses bandwidth and/or location as examples to introduce whether a network can meet the requirements of a service. This is not intended to be limiting. Whether a network can meet the requirements of a service can also be implemented in other ways. For example, whether the transmission delay of the service on the network side meets the requirements of the service transmission delay, or whether the queuing waiting time of the service data packet meets the requirements of the queuing waiting time of the service data packet, etc. In other words, any parameter that can be used to represent whether the requirements of a service can be met by a network can be applicable to the embodiments of this application.

Method 5: The data management network element may obtain the indication information according to a preset condition.

The preset condition may be preconFIG.d locally at the data management network element. Specifically, it may include at least one of the following: within a time period in which the terminal needs to establish a plurality of connections, or when the location of the terminal is within an area where the terminal needs to establish a plurality of connections. In other words, the data management network element may determine, based on the current time and the current location of the terminal, to trigger the terminal to establish a plurality of connections, thereby avoiding additional overheads caused by interaction with other network elements.

A time period in which the terminal needs to establish a multi-connection is similar to the preset time period indicated by the foregoing time policy. For understanding, refer to. Therefore, when the current time is the start time of the preset time period, and the terminal has not established a multi-connection, the data management network element may obtain the indication information. For a specific obtaining manner, refer to the related description of the foregoing manner 1, and details are not described herein again. For example, the preset time period is a time period from t1 to t2 after the start moment of each period, for example, 18:00 to 22:00 every day, that is, a time period in which the user uses the time period frequently. When the current time is 18:00, the data management network element may obtain the indication information. and performing a subsequent process in this embodiment of this application, to trigger the terminal to establish a multi-connection, so as to ensure service experience of the user in the time period. Then, when the current time is 22:00, the data management network element may instruct the terminal to release the multi-connection, so as to reduce communication overheads and save energy for the terminal.

An area in which the terminal needs to establish a multi-connection area is similar to the preset area indicated by the foregoing location policy. For example, if the area is the foregoing low-signal area, reference may be made to understand the area. The data management network element uses the subscription service from the terminal-related access and mobility management network element (or an access and mobility management network element serving a terminal). The location of the terminal is obtained, or the location of the terminal may be obtained in another manner, for example, the access network device reports the location to the data management network element by using the access and mobility management network element, which may be specifically selected according to an actual requirement, and is not specifically limited. In this way, when the terminal currently moves into the preset area and the terminal currently does not establish a multi-connection, the data management network element may obtain the indication information. For a specific obtaining manner, refer to the related description in the foregoing manner 1, and details are not described herein again.

Method 6: The terminal sends slice information and/or a data network name corresponding to the session of the terminal to the network. Correspondingly, the data management network element may obtain the slice information and/or the data network name corresponding to the session of the terminal, and according to whether the service of the terminal requires the establishment of a multi-connection service, obtain the relevant information of the multi-connection service.

Among them, the slice information and/or the data network name may correspond to the service of the terminal.

The slice information and/or the data network name corresponding to the session of the terminal can be reported to the network through a session establishment procedure. For example, in the process of establishing a session for the terminal, the terminal may send, to the access and mobility management network element, a PDU session establishment request message carrying the slice information and/or the data network name. The access and mobility management network element may select a session management network element, and send the slice information and/or the data network name to the session management network element through a PDU session establishment session context request message. After receiving the slice information and/or the data network name, the session management network element may report the slice information and/or the data network name to the data management network element when registering the session context of the session of the terminal with the data management network element. In other words, in a process of registering the terminal, and in a process of establishing the session of the terminal, the data management network element receives, from the session management network element, a context registration request message, where the context registration request message may include the slice information and/or the data network name.

The data management network element may determine, based on the slice information or the correspondence between the data network name and the service, the slice information and/or the service corresponding to the data network name in the context registration request message. In this case, one implementation manner is: The data management network element may determine whether the requirement of the service is met. For example, the data management network element may initiate a subscription to the access and mobility management network element or the session management network element, in order to determine whether the bandwidth provided by the network currently accessed by the terminal can meet the bandwidth requirement of the service. For a specific implementation, refer to the related description of the foregoing manner 5. Details are not described herein again. Another implementation manner is: The data management network element may determine whether the requirement of the service is met. For example, the data management network element may initiate a subscription to the access and mobility management network element or the session management network element, in order to determine whether the bandwidth provided by the network currently accessed by the terminal can meet the bandwidth requirement of the service. For a specific implementation, refer to the related description of the foregoing manner 5. Details are not described herein again. In the case where the bandwidth provided by the network currently accessed by the terminal cannot meet the bandwidth requirement of the service, and the terminal has not established a multi-connection, the data management network element may obtain the indication information. For a specific obtaining manner, refer to the related description of the foregoing manner 1. Details are not described herein again.

Alternatively, the data management network element may determine that the current network cannot meet the service requirement of the terminal. For example, if the slice requested by the UE is intelligently provided by the current network, or the service requested by the UE cannot be provided by the current network, for example, the NPN cannot provide the IMS service, and the UE may select an additional PLMN to obtain the IMS service when accessing the NPN. In this case, the data management network element triggers establishment of a multi-connection, so as to meet a network requirement of a service of the terminal for a network.

Manner 7: When the terminal needs to establish a multi-connection, the terminal may send request information to the network. Correspondingly, the data management network element may receive the request information from the terminal, and obtain the multi-connection related information according to the request information.

The request information is used to indicate that the terminal requests to establish a multi-connection. In other words, establishment of the multi-connection may be triggered by the terminal itself, so that interaction between the terminal and a network side is simpler, and communication overheads may be lower. For example, the terminal may provide the user with a function of enabling or disabling a multi-connection. For example, the terminal provides a multi-connection user interaction interface, and a button for enabling or disabling a multi-connection function is set on the user interaction interface. The user may select to enable or disable a multi-connection function by clicking the button. For another example, the terminal may provide an interface for selecting a network mode. On the interface, if the user selects a network model as a multi-network, it indicates that the multi-connection function is enabled; if the user selects a network model as a single network, it indicates that the multi-connection function is disabled. In this case, the multi-connection needs to be released. Establish a single connection. Alternatively, the function of enabling or disabling the multi-connection function by the user may be further implemented. This is not limited in this application.

If the user operation enables a multi-connection, the terminal may respond to the user operation and send request information to the network, for example, send a UL NAS message carrying the request information to the access and mobility management network element. After obtaining the request information, the access and mobility management network element may send the request information to the data management network element, for example, send a subscription data acquisition request message carrying the request information. Correspondingly, the data management network element may receive the request information from the terminal, for example, receive the subscription data acquisition request message that carries the request information. That is, the data management network element may be implemented by multiplexing existing signaling, or may be implemented by using a newly defined procedure, which is decoupled from the existing procedure, and information element transfer may be more flexible. The data management network element may obtain the indication information based on the request information. For a specific obtaining manner, refer to the related description of the foregoing manner 1. Details are not described herein again.

It should be noted that the foregoing Manners 1 to 7 may also be combined and implemented. For example, the manner 1 and the manner 2 are implemented in combination. The data management network element may obtain the indication information when the terminal supports a multi-connection, and a network slice requested by the terminal is a network slice corresponding to a the multi-connection service. For another example, the manner 1 and the manner 3 are implemented in combination. The data management network element may obtain the indication information when the terminal supports a multi-connection and the terminal subscribes to a multi-connection service. For another example, the manner 1, the manner, and the manner 3 are implemented together. The data management network element may obtain the indication information when the terminal supports a multi-connection, the network slice requested by the terminal is a network slice corresponding to the multi-connection service, and the terminal subscribes to the multi-connection service. Certainly, there may be another combination manner, for example, a combination of the manner 1 and the manner 4, or a combination of the manner 1 and the manner 5. For understanding, refer to the description, and details are not described again in this embodiment of this application.

S802:
The data management network element may send the indication information to the terminal by using the SOR procedure. For example, for an SOR procedure in the registration procedure, the data management network element sends, to the access and mobility management network element, a subscription data acquisition response message that carries the indication information. Correspondingly, the access and mobility management network element receives the indication information from the data management network element, for example, a subscription data acquisition response message that carries the indication information. The access and mobility management network element may add the indication information to the registration accept message, and then send the registration accept message to the terminal. For the SOR procedure after the registration procedure, the data management network element sends, to the access and mobility management network element, the subscription data acquisition response message that carries the indication information. Correspondingly, after receiving the indication information from the data management network element, the access and mobility management network element may send the indication information to the terminal by using the DL NAS transport container.

It may be understood that the SOR process may also be understood with reference to related content in the foregoing technical term introduction, and details are not described herein again.

S803:
The network currently accessed by the terminal is referred to as the first network. In other words, the terminal has already established a connection of the 3GPP access type with the first network. On this basis, the terminal may select the second network from the plurality of networks indicated by the network list according to the indication information. For example, the terminal may sequentially select one or more second networks according to the priority of the plurality of networks from high to low, and establish a connection of the 3GPP access type with the second network.

If the network list further indicates that each of the plurality of networks supports the wireless access technology type subscribed by the terminal, then after the terminal selects the second network, the terminal may further access the second network according to the wireless access technology type subscribed by the terminal and supported by the second network as indicated by the network list. For example, NT access or NTN access, etc.

If the indication information further indicates a policy for establishing a multi-connection, then the terminal needs to establish a connection according to the policy when the policy is satisfied. For example, the terminal determines that the network currently accessed by the terminal cannot meet the service requirements, or the terminal currently moves to a preset area, or the current time is the start time of a preset time period. In this case, the terminal may select the second network from the plurality of networks indicated by the network list, and establish a connection of the 3GPP access type with the second network. Alternatively, the terminal may also select the second network in advance, so that when the policy is satisfied, the terminal can trigger the establishment of a connection of the 3GPP access type with the second network. In addition, if the policy for establishing a multi-connection indicates an access type policy, then when the terminal selects a network, the terminal should consider whether the network supports the wireless access technology type subscribed by the terminal, so that the combination of the wireless access technology type subscribed by the terminal and the wireless access technology type supported by the second network selected by the terminal can meet the requirements of the access type policy.

It can be understood that, in the foregoing S801 to S803, the data management network element usually sends the indication information to the terminal only when the terminal has not established a plurality of connections currently. In this way, the terminal is triggered to establish the plurality of connections. Of course, the data management network element may also not consider whether the terminal has established a plurality of connections currently. In this case, the data management network element sends the indication information to the terminal by default. At this time, if the terminal has established a plurality of connections, the terminal may ignore the indication information, or the terminal may also update the plurality of connections according to the indication information. For example, the terminal may select a new network from the network list indicated by the indication information to access the network. For example, the terminal has established a plurality of connections, and the plurality of connections are that the terminal simultaneously establishes 3GPP access-type connections with both PLMN#1 and PLMN#2. In this case, the terminal may further establish a 3GPP access-type connection with PLMN#3 according to the latest network list delivered. Alternatively, the terminal may first release the 3GPP access-type connection established with PLMN#2, and then establish a 3GPP access-type connection with PLMN#3.

It can be understood that the foregoing is merely an example in which the network delivers a network list or the network list is pre-stored in the terminal locally. However, this is not intended as a limitation. The terminal may also have other ways of obtaining the network list. For example, the terminal may dynamically construct the network list locally. One implementation is as follows: The terminal obtains a network selection list in advance. The network selection list may be an existing list, for example, may be obtained by using the process defined in the foregoing "3. Roaming Steering (SOR)". The indication information sent by the network to the terminal may be a type of wireless access technology supported by the plurality of connections, or a type of wireless access technology supported by the second network. The terminal may select, from the network selection list, a network that supports the wireless access technology type, and use these networks to construct the network list in the embodiments of this application.

The foregoing describes, with reference to FIG. 8, the process of organizing the communication method provided in the embodiments of this application. The following describes in detail, with reference to FIG. 9 to FIG. 12, the specific process of the communication method provided in the embodiments of this application in a specific scenario.

### Scene 1:

FIG. 9 is a schematic flowchart illustrating a second example of a communication method according to an embodiment of this application. In Scenario 1, the UDM (the data management network element mentioned above) may deliver the indication information to the UE through the SOR procedure in the registration procedure of the UE.

Specifically, as shown in FIG. 9, the process of the communication method is as follows:
S901: The UE sends a registration request message to the AMF (the access and mobility management network element mentioned above).

Specifically, the registration request message may carry capability information of the UE (for example, the capability information of the terminal mentioned above), to indicate whether the UE supports a multi-connection. For specific principles, refer to the related descriptions in the foregoing manner 1, which will not be repeated here.

S902: The AMF sends a request message for registering a UE context to the UDM.

When the UE provides the capability information of the UE, the UE context request message may carry the capability information of the UE.

S903: The UDM determines whether the UE has subscribed to a multi-connection service.

When the capability information of the UE indicates that the UE supports a multi-connection, the UDM can determine whether the subscription data of the UE comprises a multi-connection service. That is, the UDM determines whether the UE has subscribed to a multi-connection service. For the specific principle, refer to the related descriptions of the foregoing manner 2. Details are not described herein again. If the UE has subscribed to a multi-connection service, the subsequent procedure of this embodiment of this application continues. Otherwise, if the capability information of the UE indicates that the UE does not support a multi-connection, or the UE has not subscribed to a multi-connection service, the procedure in the prior art is performed.

S904: The UDM sends a response message for registering a UE context to the AMF.

S905: The AMF sends a subscription data acquisition request message to the UDM.

Among them, the specific implementation principles of S904 to S905 can refer to the related descriptions in the registration procedure defined by 3GPP. Details are not described again.

S906: The UDM determines whether a multi-connection has been established for the UE currently.

The AMF may trigger the UDM to determine whether a multi-connection has been established for the UE currently by requesting, through the subscription data acquisition request message, the UDM to obtain subscription data of the UE. For example, the UDM may determine whether the UDM stores one or more pieces of subscription data of the UE. If the UDM stores one piece of subscription data of the UE, the subsequent procedure in this embodiment of this application continues. Otherwise, the UDM does not trigger the subsequent SOR procedure.

It may be understood that S903 and S906 may also be performed together.

S907: The UDM sends an SOR acquisition request message to the SOR-AF (the aforementioned application function network element).

S908: The SOR-AF sends an SOR acquisition response message to the UDM.

The SOR acquisition request message can be used to request the SOR-AF to provide a network that can be used to establish a multi-connection. Optionally, the SOR acquisition request message may also carry the S-NSSAI and/or DNN corresponding to the session of the UE. The SOR acquisition request message may carry the aforementioned network list. For specific principles, refer to the related introduction of Method 1 above, which will not be repeated here.

S909: The UDM verifies the information security.

The UDM can verify the security of the network list. If the verification is successful, the subsequent process of this embodiment of this application continues. Otherwise, the process fails.

It should be understood that S907 and S909 are optional procedures, and the UDM network element may obtain the network list locally. Alternatively, when the UE is preconFIG.d with the network list in advance, that is, the network does not need to dynamically deliver the network list, S907 and S909 are not performed.

S910: The UDM sends a subscription data acquisition response message to the AMF.

The subscription data acquisition response message may carry the subscription data of the UE and indication information, and the indication information may be used to indicate that the UE needs to establish a plurality of connections. Optionally, the indication information may further include a network list.

S911: The UDM sends a registration accept message to the UE.

The registration accept message may be used to indicate that the UE successfully registers with the network, and the registration accept message may further include the foregoing indication information.

It can be seen that S910-S911 represent the SOR process in the registration procedure. By reusing the messages in the registration procedure, the SOR information, such as the network list, can be delivered to the UE.

S912: The UE establishes a multi-connection.

Among them, the specific implementation principle of S912 can refer to the relevant introduction of S803 above, and will not be repeated here.

### Scene 2:

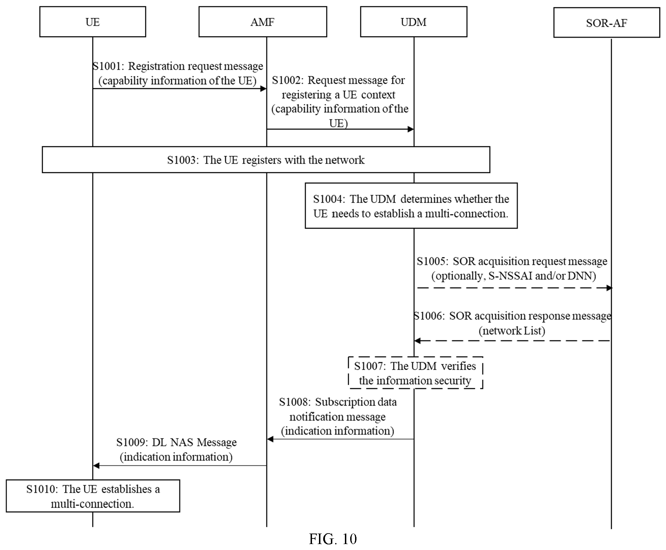

FIG. 10 is a schematic flowchart of a communication method according to Embodiment 3 of this application. In Scene 2, the UDM (the data management network element mentioned above) may deliver the indication information to the UE through the SOR process in the registration procedure of the UE.

Specifically, as shown in FIG. 10, the process of this communication method is as follows:
S1001: The UE sends a registration request message to the AMF (the aforementioned access and mobility management network element).

Among them, the registration request message may carry capability information of the UE (such as the capability information of the terminal mentioned above), which is used to indicate whether the UE supports a multi-connection. For the specific principle, reference may also be made to the relevant descriptions in the above-mentioned Method 1, and will not be repeated here.

S1002: The AMF sends a request message for registering a UE context to the UDM.

When the UE provides the capability information of the UE, the UE context request message may carry the capability information of the UE.

S1003: The UE registers with the network.

S1003 is to continue to perform the completed registration procedure after S1002. For a specific implementation principle, reference may be made to the related description in the registration procedure defined by the 3GPP, and details are not described again.

S1004: The UDM determines whether the UE needs to establish a multi-connection.

When the UE supports a multi-connection, and the UE currently has not established a multi-connection, the UDM may determine, based on a location of the UE and/or a time in a current period, whether the UE needs to establish the multi-connection. For a specific implementation principle, refer to the related description of the manner 5. Details are not described herein again. If the UE needs to establish a multi-connection, a subsequent procedure in this embodiment of this application continues. Otherwise, the UDM does not trigger a subsequent SOR procedure.

S1005: The UDM sends an SOR acquisition request message to the SOR-AF (the foregoing application function network element).

S1006: The SOR-AF sends an SOR acquisition response message to the UDM.

The SOR acquisition request message may be used to request the SOR-AF to provide a network that can be used to establish a multi-connection. Optionally, the SOR acquisition request message may further carry S-NSSAI and/or a DNN corresponding to the session of the UE. The SOR acquisition request message may carry the foregoing network list. For a specific principle, reference may also be made to the related description of the foregoing manner 1, and details are not described herein again.

S1007: The UDM verifies information security.

The UDM may verify the security of the network list. If the verification succeeds, the UDM continues the subsequent process in this embodiment of this application. Otherwise, the process fails.

It should be understood that S1005 to S1007 are optional procedures, and the UDM network element may obtain the network list locally. Alternatively, when the UE is preconFIG.d with the network list in advance, that is, the network does not need to dynamically deliver the network list, S1005 to S1007 is not performed.

S1008: The UDM sends a subscription data notification message to the AMF.

The subscription data notification message may carry indication information, which may be used to indicate that the UE needs to establish a multi-connection. Optionally, the indication information may further include a network list.

S1009: The AMF sends a DL NAS message to the UE.

The DL NAS message may carry the aforementioned indication information.

It can be seen that S1008-S1009 constitute the SOR procedure following the registration procedure, thereby enabling the delivery of SOR information, such as a network list, to the UE.

S1010: The UE establishes a multi-connection.

Among them, the specific implementation principle of S1010 can refer to the relevant introduction of S803 above, and will not be repeated here.

### Scene 3:

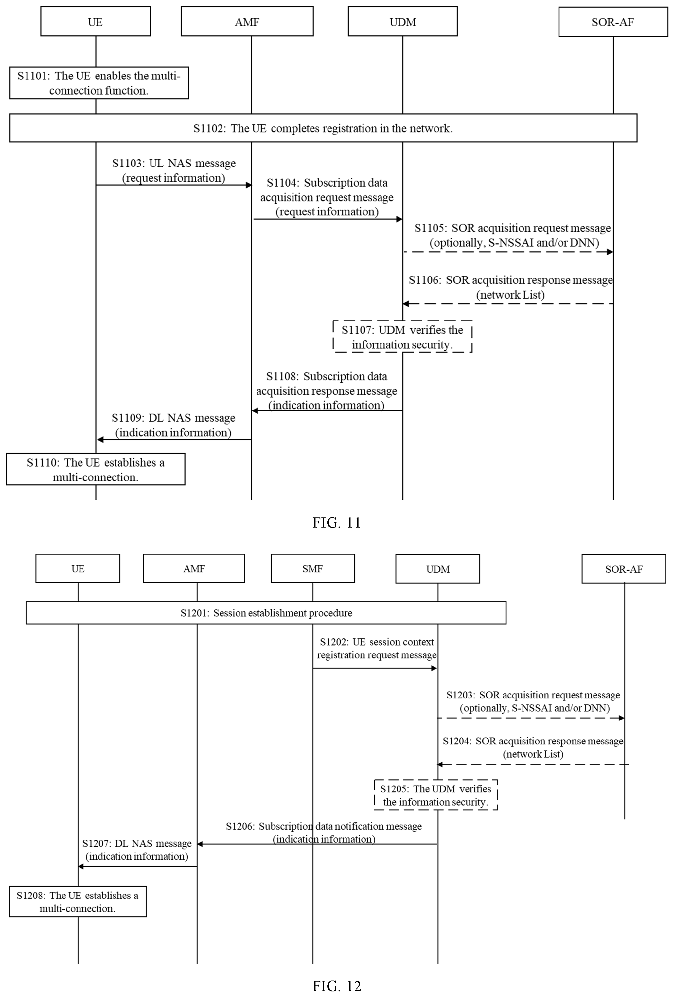

FIG. 11 is a schematic flowchart 4 of a communication method according to an embodiment of this application. In scenario 4, the UDM (the data management network element mentioned above) may trigger the delivery of the indication information to the UE based on the request of the UE (the terminal mentioned above) to establish a multi-connection.

Specifically, as shown in FIG. 11, the procedure of the communication method is as follows:
S1101: The UE enables the multi-connection function.
S1102: The UE completes registration in the network.

Among them, the specific implementation principle of S1101 can refer to the related description of method 7 in S801 above, and will not be repeated here. The specific implementation principle of S1102 can refer to the related description of the registration procedure defined in 3GPP, and will not be repeated here. Additionally, the execution order of S1101 and S1102 is not limited.

S1103: The UE sends a UL NAS message to the AMF.

The UL NAS message may carry request information, which is used by the terminal to request the establishment of a multi-connection.

S1104: The AMF sends a subscription data acquisition request message to the UDM.

The subscription data acquisition request message may carry the aforementioned request information.

S1105: The UDM sends an SOR acquisition request message to the SOR-AF (the aforementioned application function network element).

S1106: The SOR-AF sends an SOR acquisition response message to the UDM.

The SOR acquisition request message can be used to request the SOR-AF to provide a network that can be used to establish a multi-connection. Optionally, the SOR acquisition request message may also carry the S-NSSAI and/or DNN corresponding to the session of the UE. The SOR acquisition request message may carry the aforementioned network list. For specific principles, refer to the related introduction of method 1 above, which will not be repeated here.

S1107: The UDM verifies the information security.

The UDM can verify the security of the network list. If the verification is successful, the subsequent process of this embodiment of this application continues. Otherwise, the process fails.

It should be understood that S1105-S1107 are optional processes. The UDM network element may obtain the network list from a local location. Alternatively, if the UE has been preconFIG.d with a network list, that is, there is no need for the network to dynamically deliver the network list, S1105-S1107 are not performed.

S1108: The UDM sends a subscription data acquisition response message to the AMF.

The subscription data notification message may carry indication information, which may be used to indicate that the UE needs to establish a multi-connection. Optionally, the indication information may further include a network list.

S1109: The AMF sends a DL NAS message to the UE.

The DL NAS transmission may carry the aforementioned indication information.

S1110: The UE establishes a multi-connection.

For a specific implementation principle of S1110, refer to the related description of S803 above. This will not be further elaborated here.

### Scenario 4:

FIG. 12 is a schematic flowchart illustrating the process of a communication method according to an embodiment of this application. In scenario 4, the UDM (the data management network element mentioned above) may deliver the indication information to the UE through the session establishment procedure of the UE (the terminal mentioned above).

Specifically, as shown in FIG. 12, the process of the communication method is as follows:
S1201: Session establishment procedure.

The session establishment procedure can be performed by executing S401-S416b shown in FIG. 4 above. For specific details, please refer to the relevant descriptions in FIG. 4 above, which will not be repeated here.

S1202: The SMF sends a UE session context registration request (Nudm_UECM_Registration request) message to the UDM.

The UE session context registration request may carry the UE's S-NSSAI and/or DNN (the S-NSSAI and/or DNN of the aforementioned terminal).

S1203: The UDM sends an SOR acquisition request message to the SOR-AF (the aforementioned application function network element).

S1204: The SOR-AF sends an SOR acquisition response message to the UDM.

The SOR acquisition request message can be used to request the SOR-AF to provide a network that can be used to establish a multi-connection. Optionally, the SOR acquisition request message may also carry the UE's S-NSSAI and/or DNN. The SOR acquisition request message may carry the aforementioned network list. For specific principles, reference may also be made to the relevant descriptions of the aforementioned method 1, which will not be repeated here.

S1205: The UDM verifies the information security.

The UDM may verify the security of the network list. If the verification succeeds, the UDM continues the subsequent process in this embodiment of this application. Otherwise, the process fails.

It should be understood that S1203 to S1205 are optional procedures, and the UDM network element may obtain the network list locally. Alternatively, when the UE is preconFIG.d with the network list in advance, that is, the network does not need to dynamically deliver the network list, S1203 to S1205 is not performed.

S1206: The UDM sends a subscription data notification message to the AMF.

The subscription data notification message may carry indication information, and the indication information may be used to indicate that the UE needs to establish a multi-connection. Optionally, the indication information may further include a network list. In other words, the UDM may trigger to obtain the indication information based on the S-NSSAI and/or the DNN of the UE, and perform S1205 to S1206. For a specific implementation principle, refer to the related description of manner 6 in S801. Details are not described herein again.

S1207: The AMF sends a DL NAS message to the UE.

The DL NAS transmission may carry the aforementioned indication information.

S1208: The UE establishes a multi-connection.

Among them, the specific implementation principle of S1208 can refer to the related description of S803 above. Details are not repeated here.

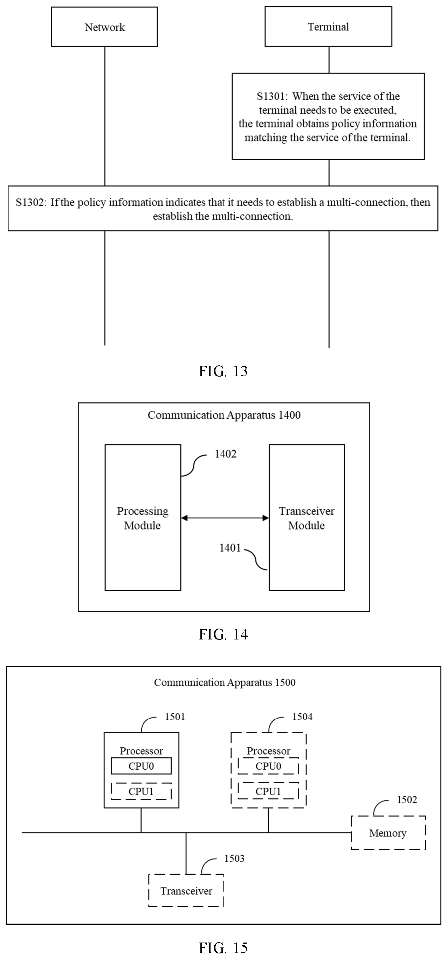

FIG. 13 is a schematic flowchart of a communication method according to an embodiment of this application. The communication method is applicable to the aforementioned communication system and mainly involves interaction between a terminal and a network.

S1301: When a service of the terminal needs to be executed, the terminal obtains policy information matching the service of the terminal.

The policy information may be a URSP rule, or any route-related policy or rule, which is not limited. The URSP rule may be an enhanced URSP rule, and the URSP rule may indicate a plurality of connections. For example, it is defined that the terminal needs to establish connections of a 3GPP access type to a plurality of networks respectively at the same time. In other words, a meaning similar to the foregoing indication information may also be referred to for details. Details are not described again. Optionally, the URSP rule may further indicate a multi-connection policy, for example, a radio access technology type combination required for the multi-connection establishment, or another policy. For details, refer to related description of the foregoing policy. Details are not described herein again.

When the terminal needs to perform a service, for example, the terminal starts an application, such as an XRM application or any other possible application, in response to an operation of the user, the terminal needs to perform a service corresponding to the application, such as an XRM service or any other possible service. In this case, the terminal may determine the URSP rule based on the traffic volume descriptor. For example, the terminal matches, based on a service feature indicated by the traffic volume descriptor, a URSP rule similar to the service feature, that is, determines the URSP rule matching the service.

S1302: If the policy information indicates that it needs to establish a multi-connection, then establish the multi-connection.

If the URSP rule that matches the service is the enhanced URSP rule mentioned above, the terminal may establish a multi-connection with the network according to the indication of the URSP rule (for example, based on the policy information or the terminal's own decision). The specific implementation principle is similar to that of S803 above, and can be referred to and understood. It will not be further elaborated here.

Of course, the embodiments of this application use the URSP rule as an example, but are not limited to the URSP rule. Any policy and/or rule that is similar to the URSP rule or that can implement a routing function can be used to implement the solutions in this application.

In summary, the terminal may perform policy information matching. When the service matches the policy information indicating the need to establish a multi-connection, the terminal triggers the establishment of a multi-connection, to ensure that the multi-connection can meet the requirements of the service, and ensure the user's experience.

In a possible design, with reference to the foregoing S1301 to S1302, before S1301, the method may further include: in a case in which the terminal's policy information needs to be updated, the policy control network element may obtain new policy information of the terminal, and send the new policy information to the terminal. Correspondingly, the terminal may further receive the policy information from the network, and conFIG. the policy information locally on the terminal. In this case, the new policy information may be the enhanced URSP rule mentioned above. The policy control network element may obtain the new policy information from the application function, or the new policy information may be manually conFIG.d by a person for the policy control network element. This is not limited.

The above, in combination with FIG.s 8 to 13, provides a detailed explanation of the communication method provided by the embodiments of this application. The following, in combination with FIG.s 14 to 15, provides a detailed explanation of the communication apparatus used to execute the communication method provided by the embodiments of this application.

FIG. 14 is a schematic structural diagram 1 of a communication apparatus according to an embodiment of this application. For example, as shown in FIG. 14, the communication apparatus 1400 comprises a transceiver module 1401 and a processing module 1402. For ease of description, FIG. 14 shows only the main components of the communication apparatus.

In a first possible embodiment, the communication apparatus 1400 may be applicable to the data management network element in the foregoing communication method, to implement a function of the data management network element. The details are as follows.

The processing module 1402 is conFIG.d to: when the terminal has not established a multi-connection, obtain indication information. The transceiver module 1401 is conFIG.d to send the indication information to the terminal. The indication information is used to indicate that the terminal needs to establish a multi-connection. The multi-connection refers to simultaneously establishing multiple connections of a 3rd Generation Partnership Project 3GPP access type, and the connections of the 3GPP access type belong to the same or different networks.

In one possible design scheme, the indication information comprises a network list, and the plurality of networks indicated by the network list are networks capable of being used to establish a multi-connection.

Optionally, the transceiver module 1401 is further conFIG.d to obtain the indication information from the application function.

Optionally, the transceiver module 1401 is further conFIG.d to: before obtaining the indication information from the application function, send the slice information and/or the data network name corresponding to the session of the terminal to the application function network element. The plurality of networks indicated by the network list are networks that support the slice information and/or the data network name.

Optionally, the network list indicates that the plurality of networks do not include the network currently accessed by the terminal.

In one possible design scheme, the network list further indicates that the plurality of networks support the radio access technology type subscribed by the terminal.

In a possible design solution, the transceiver module 1401 is further conFIG.d to receive capability information of the terminal, and the processing module 1402 is further conFIG.d to obtain indication information based on the capability information of the terminal. The capability information of the terminal is used to indicate that the terminal supports a multi-connection.

Optionally, the transceiver module 1401 is further conFIG.d to receive, in a terminal registration process, a context registration request message from an access and mobility management network element, where the context registration request message comprises the capability information of the terminal.

In a possible design solution, the processing module 1402 is further conFIG.d to obtain slice information requested by the terminal, and obtain indication information based on a slice corresponding to a multi-connection service in a network slice. The slice information requested by the terminal is used to indicate a network slice requested by the terminal.

Optionally, the transceiver module 1401 is further conFIG.d to receive, in a terminal registration process, a context registration request message from an access and mobility management network element. The context registration request message comprises slice information requested by the terminal.

In one possible design solution, the processing module 1402 is further conFIG.d to obtain subscription data of the terminal, and obtain indication information based on the subscription data of the terminal. The subscription data of the terminal indicates that the terminal supports a multi-connection.

Optionally, the transceiver module 1401 is further conFIG.d to: in a process of terminal registration, receive a subscription data acquisition request message from an access and mobility management network element. The processing module 1402 is further conFIG.d to obtain subscription data of the terminal based on the subscription data acquisition request message. The subscription data acquisition request message is used to request the subscription data of the terminal with the network.

In one possible design solution, the transceiver module 1401 is further conFIG.d to receive service information from an access and mobility management network element. The processing module 1402 is further conFIG.d to obtain indication information based on the service requirement of the terminal not being met. The service information is used to indicate that the service requirement of the terminal is not met.

Optionally, the service requirement of the terminal not being met comprises: the bandwidth provided for the terminal cannot meet the bandwidth requirement of the terminal's service, and/or, the signal quality of the terminal cannot meet the signal quality requirement of the terminal's service, or there may be any other possible situation, which is not limited herein.

In one possible design scheme, the processing module 1402 is further conFIG.d to obtain indication information based on preset conditions. The preset conditions include at least one of the following: the current time period in which the terminal needs to establish a multi-connection, or the location of the terminal is within an area where the terminal needs to establish the multi-connection.

Optionally, the transceiver module 1401 is further conFIG.d to obtain, by subscribing to a service, a request message for obtaining a location of the terminal from an access and mobility management network element.

In one possible design scheme, the transceiver module 1401 is further conFIG.d to receive request information corresponding to a session of the terminal. The processing module 1402 is further conFIG.d to obtain indication information based on the request information. The request information is used to indicate that the terminal requests to establish a multi-connection.

Optionally, the transceiver module 1401 is further conFIG.d to receive a request message for obtaining a location of the terminal from an access and mobility management network element, where the request message for obtaining the location of the terminal is obtained by subscribing to a service, and the request message comprises request information.

In one possible design scheme, the processing module 1402 is further conFIG.d to obtain slice information and/or a data network name corresponding to a session of the terminal, based on the session of the terminal. The processing module 1402 is further conFIG.d to obtain indication information based on the fact that the terminal's service is a service that requires the establishment of a multi-connection. The slice information and/or the data network name correspond to the terminal's service.

Optionally, the transceiver module 1401 is further conFIG.d to receive, by the data management network element, a context registration request message from the session management network element in a session establishment process of the terminal, where the context registration request message comprises slice information and/or a data network name.

Optionally, the transceiver module 1401 may include a sending module (not shown in FIG. 14) and a receiving module (not shown in FIG. 14). The sending module is conFIG.d to implement a sending function of the communications apparatus 1400, and the receiving module is conFIG.d to implement a receiving function of the communications apparatus 1400.

Optionally, the communications apparatus 1400 may further include a storage module (not shown in FIG. 14), and the storage module stores a program or an instruction. When the processing module 1402 executes the program or the instruction, the communications apparatus 1400 can perform functions in the methods shown in FIG. 6 to FIG. 8.

It may be understood that the communications apparatus 1400 may be a network device, or may be a chip (system) or another component or component that may be disposed in the network device, or may be an apparatus that comprises a network device. This is not limited in this application.

Furthermore, the technical effects of the communication apparatus 1400 can refer to the technical effects of the communication method mentioned above. This will not be further elaborated here.

In a second possible embodiment, the communication apparatus 1400 may be applicable to the application function network element in the aforementioned communication method, thereby implementing the functions of the application function network element. The details are as follows.

The transceiver module 1401 is conFIG.d to receive a request message. The processing module 1402 is conFIG.d to, based on the request message, control the transceiver module 1401 to send a response message. The request message is used to request the application function network element to provide a network that can be used to establish a multi-connection. The multi-connection refer to simultaneously establishing multiple connections of the 3rd Generation Partnership Project (3GPP) access type. The connections of the 3GPP access type belong to the same or different networks. The response message comprises a network list, and the plurality of networks indicated by the network list are networks that can be used to establish a multi-connection.

It can be understood that the application function network element may specifically be a roaming handover application function SOR-AF network element, or another any possible type of AF network element. This is not limited.

In a possible design solution, the transceiver module 1401 is further conFIG.d to receive slice information and/or a data network name corresponding to a session of the terminal. The processing module 1402 is further conFIG.d to determine a network list based on a plurality of networks that support the slice information and/or the data network name.

Optionally, the network list indicates that the plurality of networks do not include the network currently accessed by the terminal.

Optionally, the network list further indicates that the plurality of networks support a radio access technology type subscribed by the terminal.

Optionally, the transceiver module 1401 may include a sending module (not shown in FIG. 14) and a receiving module (not shown in FIG. 14). The sending module is conFIG.d to implement the sending function of the communications apparatus 1400. The receiving module is conFIG.d to implement the receiving function of the communications apparatus 1400.

Optionally, the communications apparatus 1400 may further include a storage module (not shown in FIG. 14), where the storage module stores a program or instructions. When the processing module 1402 executes the program or instructions, the communications apparatus 1400 can perform the functions in the methods shown in FIG. 6 to FIG. 8.

It can be understood that the communication apparatus 1400 may be a network device, or may be a chip (system) or another component or assembly that can be disposed in a network device. Alternatively, the communication apparatus 1400 may be an apparatus that comprises a network device. This application does not impose any limitation thereto.

In addition, for technical effects of the communication apparatus 1400, refer to the technical effects of the foregoing communication method. Details are not described herein again.

In a third possible embodiment, the communication apparatus 1400 may be applied to the access and mobility management network element in the foregoing communication method, to implement functions of the access and mobility management network element. Details are as follows.

The processing module 1402 is conFIG.d to control the transceiver module 1401 to send service information to a data management network element. The transceiver module 1401 is conFIG.d to receive, from the data management network element based on the service information, the indication information, and send the indication information to the terminal. The service information indicates that a service requirement of the terminal is not met; and the indication information is used to indicate that the terminal needs to establish a plurality of connections, where the plurality of connections refer to simultaneously establishing a plurality of connections of a 3rd Generation Partnership Project 3GPP access type, and the connections of the 3GPP access type belong to the same or different networks.

In a possible design solution, the transceiver module 1401 is further conFIG.d to receive an N2 message from an access network device, where the N2 message comprises service information. The processing module 1402 is further conFIG.d to determine, based on the service information, that the access network device cannot meet the service requirements of the terminal.

Optionally, the processing module 1402 is further conFIG.d to obtain the service information based on the terminal being located in an area with low signal strength. The service information is specifically used to indicate that the signal quality of the terminal cannot meet the signal quality requirements of the terminal's service.

Optionally, the transceiver module 1401 may further include a sending module (not shown in FIG. 14) and a receiving module (not shown in FIG. 14). The sending module is conFIG.d to implement the sending function of the communication apparatus 1400. The receiving module is conFIG.d to implement the receiving function of the communication apparatus 1400.

Optionally, the communication apparatus 1400 may further include a storage module (not shown in FIG. 14). The storage module stores a program or instructions. When the processing module 1402 executes the program or instructions, the communication apparatus 1400 can perform the functions in the methods shown in FIG. 6 to FIG. 8.

It can be understood that the communication apparatus 1400 may be a network device, or may be a chip (system), another component, or another assembly that can be disposed in a network device. Alternatively, the communication apparatus 1400 may be an apparatus that comprises a network device. This is not limited in this application.

In addition, for the technical effects of the communication apparatus 1400, refer to the technical effects of the foregoing communication method. Details are not described herein again.

In a fourth possible embodiment, the communication apparatus 1400 may be applied to the foregoing communication method, and a module (for example, a processor, a chip, or a chip system) of a terminal in the communication method performs the method. Alternatively, the method may be implemented by a logical node, a logical module, or software that can implement all or some functions of the terminal. For ease of description, the following uses an example in which the method is performed by the terminal for description.

The transceiver module 1401 is conFIG.d to receive indication information. The processing module 1402 is conFIG.d to establish a multi-connection based on the indication information. The indication information is used to indicate that the terminal needs to establish a multi-connection. The multi-connection refers to simultaneously establishing multiple connections of a 3rd Generation Partnership Project 3GPP access type. The connections of the 3GPP access type belong to the same or different networks.

In a possible design solution, the terminal has established a connection of a 3GPP access type with the first network. The processing module 1402 is further conFIG.d to select a second network from a plurality of networks indicated by the network list based on the indication information, and establish a connection of a 3GPP access type with the second network. The plurality of networks indicated by the network list are networks that can be used to establish a multi-connection.

Optionally, the plurality of networks indicated by the network list do not include the first network.

Optionally, the network list further indicates that the plurality of networks support a radio access technology type subscribed by the terminal.

Optionally, the indication information is further used to indicate the network list.

In a possible design solution, the transceiver module 1401 is further conFIG.d to send capability information of the terminal, where the capability information of the terminal is used to indicate that the terminal supports a multi-connection.

In a possible design solution, the transceiver module 1401 is further conFIG.d to send slice information and/or a data network name corresponding to a session of the terminal. The slice information and/or the data network name correspond to a service of the terminal, and the service of the terminal is a service that requires establishment of a multi-connection.

In a possible design solution, the transceiver module 1401 is further conFIG.d to: in a case in which the terminal needs to establish a multi-connection, send request information, where the request information is used to indicate that the terminal requests to establish a multi-connection.

In a possible design solution, the processing module 1402 is further conFIG.d to: in response to an operation of a user for enabling a multi-connection, determine that the terminal needs to establish a multi-connection; or, the processing module 1402 is further conFIG.d to: in a case in which a service of the terminal needs to be executed, obtain policy information that matches the service of the terminal; and in a case in which the policy information indicates that a multi-connection need to be established, determine that the terminal needs to establish a multi-connection.

Optionally, the transceiver module 1401 may include a sending module (not shown in FIG. 14) and a receiving module (not shown in FIG. 14). The sending module is conFIG.d to implement a sending function of the communication apparatus 1400. The receiving module is conFIG.d to implement a receiving function of the communication apparatus 1400.

Optionally, the communication apparatus 1400 may further include a storage module (not shown in FIG. 14). The storage module stores a program or instructions. When the processing module 1402 executes the program or instructions, the communication apparatus 1400 can perform functions in the method shown in FIG. 6 to FIG. 8.

It can be understood that the communication apparatus 1400 may be a terminal, or may be a chip (system) or another component or assembly that can be disposed in a terminal. Alternatively, the communication apparatus 1400 may be an apparatus that comprises a terminal. This is not limited in this application.

In addition, the technical effects of the communication apparatus 1400 may refer to the technical effects of the communication method described above. Details are not described herein again.

In a fifth possible embodiment, the communication apparatus 1400 may be applicable to the foregoing communication method, and is executed by a module (for example, a processor, a chip, or a chip system) of the terminal in the communication method. Alternatively, the communication apparatus 1400 may be implemented by a logical node, a logical module, or software that can implement all or some functions of the terminal. For ease of description, the following uses an example in which the method is executed by the terminal for description.

The processing module 1402 is conFIG.d to: when a service of the terminal needs to be executed, obtain policy information that matches the service of the terminal; and if the policy information indicates that a multi-connection needs to be established, control the transceiver module 1401 to establish the multi-connection. The multi-connection refers to simultaneously establishing a 3GPP access type connection, where the 3GPP access type connection belongs to the same or different networks.

In a possible design solution, the terminal has established a 3GPP access type connection with the first network. The processing module 1402 is conFIG.d to: select a second network from a plurality of networks indicated by a network list, and control the transceiver module 1401 to establish a 3GPP access type connection with the second network. The network list is indicated by the policy information, and the plurality of networks indicated by the network list are networks that can be used to establish a multi-connection.

In a possible design solution, the transceiver module 1401 is further conFIG.d to receive the policy information from the network.

Optionally, the transceiver module 1401 may include a sending module (not shown in FIG. 14) and a receiving module (not shown in FIG. 14). The sending module is conFIG.d to implement a sending function of the communication apparatus 1400. The receiving module is conFIG.d to implement a receiving function of the communication apparatus 1400.

Optionally, the communication apparatus 1400 may further include a storage module (not shown in FIG. 14). The storage module stores a program or instructions. When the processing module 1402 executes the program or instructions, the communication apparatus 1400 can perform the functions in the methods shown in FIG. 6 to FIG. 8.

It can be understood that the communication apparatus 1400 may be a terminal, or may be a chip (system) or another component or assembly that can be disposed in a terminal. Alternatively, the communication apparatus 1400 may be an apparatus that comprises a terminal. This application does not impose any limitation thereto.

In addition, the technical effects of the communication apparatus 1400 may refer to the technical effects of the communication method described above. Details are not described herein again.

In a sixth possible embodiment, the communication apparatus 1400 may be applicable to the policy control network element in the foregoing communication method, to implement the functions of the policy control network element. The details are as follows.

The processing module 1402 is conFIG.d to: when the policy information of the terminal needs to be updated, obtain new policy information of the terminal. The transceiver module 1401 is conFIG.d to send the new policy information to the terminal. The policy information is used to indicate that a multi-connection needs to be established. The multi-connection refers to simultaneously establishing multiple connections of a 3rd Generation Partnership Project 3GPP access type, and the connections of the 3GPP access type belong to the same or different networks. In other words, by updating the policy information, the terminal can have a capability of establishing a multi-connection.

In a possible design solution, the new policy information further indicates a combination of types of radio access technologies required for establishing the multi-connection.

Optionally, the transceiver module 1401 may include a sending module (not shown in FIG. 14) and a receiving module (not shown in FIG. 14). The sending module is conFIG.d to implement a sending function of the communications apparatus 1400. The receiving module is conFIG.d to implement a receiving function of the communications apparatus 1400.

Optionally, the communications apparatus 1400 may further include a storage module (not shown in FIG. 14), which stores a program or instructions. When the processing module 1402 executes the program or instructions, the communications apparatus 1400 can perform the functions in the methods shown in FIG. 6 to FIG. 8.

It may be understood that the communications apparatus 1400 may be a network device, or may be a chip (system) or another part or component that can be disposed in a network device, or may be an apparatus that comprises a network device. This is not limited in this application.

In addition, for a technical effect of the communications apparatus 1400, refer to the technical effect of the foregoing communication method. Details are not described herein again.

FIG. 15 is a schematic structural diagram 2 of a communications apparatus according to an embodiment of this application. For example, the communications apparatus may be a terminal, or may be a chip (system) or another component or component that may be disposed in the terminal. As shown in FIG. 15, the communications apparatus 1500 may include a processor 1501. Optionally, the communications apparatus 1500 may further include a memory 1502 and/or a transceiver 1503. The processor 1501 is coupled to the memory 1502 and the transceiver 1503, for example, may be connected by using a communications bus.

The following describes components of the communications apparatus 1500 in detail with reference to FIG. 15.

The processor 1501 is a control center of the communications apparatus 1500, and may be a processor, or may be a collective name of a plurality of processing elements. For example, the processor 1501 is one or more central processing units (central processing unit, CPU), or may be an application specific integrated circuit (application specific integrated circuit, ASIC), or is conFIG.d as one or more integrated circuits that implement the embodiments of this application. For example, one or more microprocessors (digital signal processor, DSP), or one or more field programmable gate arrays (field programmable gate array, FPGA).

Optionally, the processor 1501 may execute various functions of the communication apparatus 1500 by running or executing a software program stored in the memory 1502, and by invoking data stored in the memory 1502. For example, the processor 1501 may execute the communication method shown in FIG. 8 to FIG. 13.

In a specific implementation, as an embodiment, the processor 1501 may include one or more CPUs. For example, as shown in FIG. 15, the processor 1501 comprises a CPU 0 and a CPU 1.

In a specific implementation, as an embodiment, the communication apparatus 1500 may also include a plurality of processors, for example, the processor 1501 and the processor 1504 shown in FIG. 15. Each of these processors may be a single-core processor (single-CPU), or may be a multi-core processor (multi-CPU). The processor herein may refer to one or more devices, circuits, and/or processing cores conFIG.d to process data (e.g., computer program instructions).

The memory 1502 is conFIG.d to store a software program for executing the solutions of this application, and the processor 1501 controls execution of the software program. For a specific implementation, refer to the foregoing method embodiment. Details are not described herein again.

Optionally, the memory 1502 may be a read-only memory (read-only memory, ROM) or another type of static storage device that can store static information and an instruction, a random access memory (random access memory, RAM) or another type of dynamic storage device that can store information and an instruction. It may also be an electrically erasable programmable read-only memory (electrically erasable programmable read-only memory, EEPROM), a compact disc read-only memory (compact disc read-only memory, CD-ROM) or other optical disk storage, an optical disk storage (including compact disc, laser disc, optical disc, digital versatile disc, Blu-ray disc, etc.), a magnetic disk storage medium or another magnetic storage device, or any other medium that can be used to carry or store expected program code in a form of an instruction or a data structure and that can be accessed by a computer, but is not limited thereto. The memory 1502 may be integrated with the processor 1501, or may exist independently, and is coupled to the processor 1501 by using an interface circuit (not shown in FIG. 15) of the communications apparatus 1500. This is not specifically limited in this embodiment of this application.

The transceiver 1503 is conFIG.d to communicate with another communications apparatus. For example, the communications apparatus 1500 is a terminal, and the transceiver 1503 may be conFIG.d to communicate with a network device, or communicate with another terminal device. For another example, the communications apparatus 1500 is a network device, and the transceiver 1503 may be conFIG.d to communicate with a terminal, or communicate with another network device.

Optionally, the transceiver 1503 may include a receiver and a transmitter (not separately shown in FIG. 15). The receiver is conFIG.d to implement a receiving function, and the transmitter is conFIG.d to implement a sending function.

Optionally, the transceiver 1503 may be integrated with the processor 1501, or may exist independently, and is coupled to the processor 1501 by using an interface circuit (not shown in FIG. 15) of the communications apparatus 1500. This is not specifically limited in this embodiment of this application.

It may be understood that the structure of the communications apparatus 1500 shown in FIG. 15 does not constitute a limitation on the communications apparatus. An actual communications apparatus may include more or fewer components than those shown in the FIG., or combine certain components, or have different component arrangements.

In addition, for the technical effects of the communication apparatus 1500, refer to the technical effects of the method described in the foregoing method embodiments. Details are not described herein again.

It should be understood that, in embodiments of this application, the processor may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate, or a transistor logic device, a discrete hardware component, or the like. The general-purpose processor may be a microprocessor, or the processor may be any conventional processor, or the like.

It should be further understood that the memory in this embodiment of this application may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), electrically erasable programmable read-only memory (electrically EPROM, EEPROM), or flash memory. The volatile memory may be a random access memory (random access memory, RAM), which is used as an external cache. By way of example but not limitation, many forms of random access memory (random access memory, RAM) are available, such as static random access memory (static RAM, SRAM), dynamic random access memory (dynamic random access memory, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchronously connected dynamic random access memory (synchlink DRAM, SLDRAM) and direct rambus random access memory (direct rambus RAM, DR RAM).

In the foregoing embodiments, all or a part of the embodiments may be implemented through software, hardware (such as a circuit), firmware, or any other arbitrary combination. When software is used for implementation, all or a part of the embodiments may be implemented in the form of a computer program product. The computer program product comprises one or more computer instructions or computer programs. When the computer instructions or computer programs are loaded or executed on a computer, all or a part of the processes or functions according to the embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be a computer-readable storage medium that can be accessed by a computer in any available medium, or a server, a data center, or another data storage device that comprises one or more available medium collections. The available medium may be a magnetic medium (for example, a floppy disk, a hard disk, or a magnetic tape), an optical medium (for example, a DVD), or a semiconductor medium. The semiconductor medium may be a solid-state drive.

It should be understood that, in this specification, the term "and/or" merely describes an association relationship between associated objects, indicating that three types of relationships may exist. For example, A and/or B may indicate the following three cases: A exists alone, both A and B exist, and B exists alone. Herein, A and B may be singular or plural. In addition, the character "/" in this specification generally indicates that an association relationship between the objects before and after the "/" is an "or" relationship. However, it may also indicate that the association relationship between the objects before and after the "/" is an "and/or" relationship. For specific understanding, refer to the context before and after.

In this application, "at least one" refers to one or more, and "a plurality of" refers to two or more. "At least one of the following items (pieces)" or similar expressions refer to any combination of these items, including any combination of a single item (piece) or multiple items (pieces). For example, "at least one of a, b, or c" may indicate the following three cases: a, b, c, a-b, a-c, b-c, or a-b-c, where a, b, and c may be singular or plural.

It should be understood that, in various embodiments of this application, the sequence numbers of the foregoing processes do not indicate the execution sequence. The execution sequence of the processes should be determined based on their functions and internal logic, and should not be considered as any limitation on the implementation process of the embodiments of this application.

A person of ordinary skill in the art may clearly understand that, for the convenience and conciseness of description, the specific working processes of the systems, apparatuses, and units described above may refer to the corresponding processes in the foregoing method embodiments, and details are not described herein again.

A person skilled in the art can clearly understand that, for the convenience and conciseness of description, the specific working processes of the systems, apparatuses, and units described above may refer to the corresponding processes in the foregoing method embodiments, and details are not described herein again.

In several embodiments provided in this application, it should be understood that the disclosed systems, apparatuses, and methods may be implemented in other ways. For example, the apparatus embodiments described above are merely examples. For instance, the division of the units is merely a logical function division. During actual implementation, there may be another division manner. For example, a plurality of units or components may be combined or integrated into another system, or some features may be ignored or not performed. Another point is that the mutual couplings or direct couplings or communication connections that are shown or discussed as being between the units may be through some interfaces. The indirect couplings or communication connections between the apparatuses or units may be in an electrical, mechanical, or other form.

The units described as separate components may or may not be physically separate, and parts displayed as units may or may not be physical units, that is, they may be located in one place, or may be distributed over multiple network units. Some or all of the units may be selected according to actual needs to achieve the objectives of the solutions in this embodiment.

Additionally, in various embodiments of this application, each functional unit may be integrated into one processing unit, or each unit may exist physically and independently, or two or more units may be integrated into one unit.

If the functions are implemented in the form of software functional units and sold or used as independent products, the functions may be stored in a computer-readable storage medium. Based on such an understanding, the technical solutions of this application essentially, or the part contributing to the prior art, or some of the technical solutions may be implemented in the form of a software product. The computer software product is stored in a storage medium and comprises several instructions for instructing a computer device (which may be a personal computer, a server, or a network device, etc.) to perform all or some of the steps of the methods described in the various embodiments of this application. The foregoing storage medium comprises: a USB flash drive, a removable hard disk, a read-only memory (read-only memory, ROM), a random access memory (random access memory, RAM), a magnetic disk, an optical disc, or any other medium that can store program code.

As described above, this is merely a specific implementation of this application. However, the protection scope of this application is not limited thereto. Any person skilled in the art of this technology, within the technical scope disclosed in this application, can easily conceive of variations or replacements, all of which should be covered within the protection scope of this application. Therefore, the protection scope of this application shall be determined according to the protection scope of the claims described above.

## Claims

1. A communication method, wherein it is applied to a data management network element, and comprising:
when a terminal has not established a multi-connection, the data management network element obtains the indication information, wherein the indication information is used to indicate that the terminal needs to establish the multi-connection, the multi-connection refers to simultaneously establishing multiple connections of a 3rd Generation Partnership Project (3GPP) access type, wherein the connections of the 3GPP access type belong to the same or different networks; and
the data management network element sends the indication information to the terminal.

2. The method according to claim 1, wherein the indication information comprises a network list, and a plurality of networks indicated by the network list are networks that can be used to establish the multi-connection.

3. The method according to claim 1 or 2, wherein the method further comprising:
the data management network element obtains the indication information from the application function.

4. The method according to claim 3, wherein before the data management network element obtains the indication information from the application function, the method further comprising:
the data management network element sends the slice information and/or the data network name corresponding to the session of the terminal to the application function network element; and
the plurality of networks indicated by the network list are networks that support the slice information and/or the data network name.

5. The method according to any one of claims 2 to 4, wherein:
the plurality of networks indicated by the network list do not include the network currently accessed by the terminal.

6. The method according to any one of claims 2 to 5, wherein:
the network list further indicates that the plurality of networks support the radio access technology type subscribed by the terminal.

7. The method according to any one of claims 1 to 6, wherein the data management network element obtains the indication information, comprising:
the data management network element receives capability information of the terminal, wherein the capability information of the terminal is used to indicate that the terminal supports the multi-connection; and
the data management network element obtains the indication information based on the capability information of the terminal.

8. The method according to any one of claims 1 to 6, wherein the data management network element obtains the indication information, comprising:
the data management network element obtains the slice information requested by the terminal, wherein the slice information requested by the terminal is used to indicate a network slice requested by the terminal; and
the data management network element obtains the indication information based on the fact that the network slice is a slice corresponding to the multi-connection service.

9. The method according to any one of claims 1 to 6, wherein the data management network element obtains the indication information, comprising:
the data management network element obtains subscription data of the terminal, wherein the subscription data of the terminal indicates that the terminal supports the multi-connection; and
the data management network element obtains the indication information based on the subscription data of the terminal.

10. The method according to any one of claims 1 to 6, wherein the data management network element obtains the indication information, comprising:
the data management network element receives service information from an access and mobility management network element, wherein the service information is used to indicate that the service requirements of the terminal have not been met; and
the data management network element obtains the indication information based on the fact that the service requirements of the terminal have not been met.

11. The method according to any one of claims 1 to 6, wherein the data management network element obtains the indication information, comprising:
the data management network element obtains the indication information based on a preset condition, wherein the preset condition comprises at least one of the following: currently in a time period in which the terminal needs to establish the multi-connection, or a location of the terminal is located in an area in which the terminal needs to establish the multi-connection.

12. The method according to any one of claims 1 to 6, wherein the data management network element obtains the indication information, comprising:
the data management network element receives request information from the terminal, wherein the request information is used to indicate that the terminal requests to establish the multi-connection; and
the data management network element obtains the indication information based on the request information.

13. The method according to any one of claims 1 to 6, wherein the data management network element obtains the indication information, comprising:
the data management network element obtains the slice information and/or the data network name corresponding to the session of the terminal, wherein the slice information and/or the data network name correspond to the service of the terminal; and
the data management network element obtains the indication information based on the fact that the service of the terminal is a service that requires establishing the multi-connection.

14. A communication method, wherein it is applied to an application function network element, and comprising:
the application function network element receives a request message, wherein the request message is used to request the application function network element to provide a network that can be used to establish a multi-connection, the multi-connection refer to simultaneously establishing multiple connections of a 3rd Generation Partnership Project (3GPP) access type, wherein the connections of the 3GPP access type belong to the same or different networks; and
the application function network element sends a response message based on the request message, wherein the response message comprises a network list, and a plurality of networks indicated by the network list are networks that can be used to establish the multi-connection.

15. The method according to claim 14, wherein the method further comprising:
the application function network element receives the slice information and/or the data network name corresponding to the session of a terminal; and
the application function network element determines the network list based on a plurality of networks that support the slice information and/or the name of the data network.

16. The method according to claim 14 or 15, wherein:
the plurality of networks indicated by the network list do not include the network currently accessed by the terminal.

17. The method according to any one of claims 14 to 16, wherein:
the network list further indicates that the plurality of networks support the radio access technology type subscribed by the terminal.

18. A communication method, wherein it is applied to an access and mobility management network element, and comprising:
the access and mobility management network element sends service information to a data management network element, wherein the service information indicates that the service requirements of the terminal have not been met; and
the access and mobility management network element receives the indication information based on the service information from the data management network element, wherein the indication information is used to indicate that the terminal needs to establish a multi-connection, the multi-connection refers to simultaneously establishing multiple connections of a 3rd Generation Partnership Project (3GPP) access type, wherein the connections of the 3GPP access type belong to the same or different networks; and
the access and mobility management network element sends the indication information to the terminal.

19. The method according to claim 18, wherein the method further comprising:
the access and mobility management network element receives an N2 message from an access network device, wherein the N2 message comprises the service information; and
the access and mobility management network element determines, based on the service information, that the access network device cannot meet the service requirements of the terminal.

20. The method according to claim 18, wherein the method further comprising:
the access and mobility management network element, based on that the terminal is located in a low signal area, obtains the service information, wherein the service information is specifically used to indicate that the signal quality of the terminal cannot meet the signal quality requirements of the service of the terminal.

21. A communication method, comprising:
receiving, the indication information, wherein the indication information is used to indicate that a terminal needs to establish a multi-connection, the multi-connection refers to simultaneously establishing multiple connections of a 3rd Generation Partnership Project (3GPP) access type, wherein the connections of the 3GPP access type belong to the same or different networks; and
establishing the multi-connection based on the indication information.

22. The method according to claim 21, wherein the terminal has established a connection of a 3GPP access type with a first network, and establishes the multi-connection based on the indication information, comprising:
selecting a second network from a plurality of networks indicated by a network list based on the indication information, wherein the plurality of networks indicated by the network list are networks that can be used to establish the multi-connection; and
establishing a connection of a 3GPP access type with the second network.

23. The method according to claim 22, wherein:
the plurality of networks indicated by the network list do not include the first network.

24. The method according to claim 22 or 23, wherein:
the network list further indicates that the plurality of networks support the radio access technology type subscribed by the terminal.

25. The method according to any one of claims 22 to 24, wherein the indication information is further used to indicate the network list.

26. The method according to any one of claims 22 to 25, wherein the method further comprising:
sending capability information of the terminal, wherein the capability information of the terminal is used to indicate that the terminal supports the multi-connection.

27. The method according to any one of claims 22 to 25, wherein the method further comprising:
sending slice information and/or a data network name corresponding to a session of the terminal, wherein the slice information and/or the data network name correspond to a service of the terminal, and the service of the terminal is a service that requires establishing the multi-connection.

28. The method according to any one of claims 22 to 25, wherein the method further comprising:
sending, the request information, when the terminal needs to establish the multi-connection, wherein the request information is used to indicate that the terminal requests to establish the multi-connection.

29. A communication apparatus, wherein the communication apparatus comprising: a processor and a memory; the memory is conFIG.d to store computer instructions, and when the processor executes the instructions, the communication apparatus is enabled to perform the method according to any one of claims 1-28.

30. A computer-readable storage medium, wherein the computer-readable storage medium comprises a computer program or instructions, and when the computer program or instructions are run on a computer, the computer is enabled to perform the method according to any one of claims 1-28.
